(19) Europäisches Patentamt
European Patent Office
Office européen des brevets

(11) **EP 4 454 414 B1**

(12) **EUROPÄISCHE PATENTSCHRIFT**

(45) Veröffentlichungstag und Bekanntmachung des Hinweises auf die Patenterteilung:
**17.12.2025   Patentblatt 2025/51**

(21) Anmeldenummer: **22836255.4**

(22) Anmeldetag: **19.12.2022**

(51) Internationale Patentklassifikation (IPC):
***H05B 6/12*** *(2006.01)*

(52) Gemeinsame Patentklassifikation (CPC):
**H05B 6/1236;** H05B 2213/06

(86) Internationale Anmeldenummer:
**PCT/EP2022/086817**

(87) Internationale Veröffentlichungsnummer:
**WO 2023/118021 (29.06.2023 Gazette 2023/26)**

(54) **INDUKTIONSENERGIEÜBERTRAGUNGSSYSTEM**

INDUCTION ENERGY TRANSMISSION SYSTEM

SYSTÈME DE TRANSMISSION D'ÉNERGIE PAR INDUCTION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.12.2021 EP 21383183**

(43) Veröffentlichungstag der Anmeldung:
**30.10.2024   Patentblatt 2024/44**

(73) Patentinhaber: **BSH Hausgeräte GmbH
81739 München (DE)**

(72) Erfinder:
• **MOYA NOGUES, Jesus Manuel
50001 Zaragoza (ES)**
• **LLORENTE GIL, Sergio
50009 Zaragoza (ES)**
• **PLUMED VELILLA, Emilio
50007 Zaragoza (ES)**
• **PASCUAL AZA, Jorge
50018 Zaragoza (ES)**
• **TESA BETES, Jorge
50018 Zaragoza (ES)**
• **VILLUENDAS LOPEZ, Francisco
50009 Zaragoza (ES)**
• **SERRANO TRULLEN, Javier
50017 Zaragoza (ES)**

(56) Entgegenhaltungen:
**EP-B1- 2 878 169          EP-B1- 3 228 154
US-A1- 2010 270 288**

**Beschreibung**

Die Erfindung betrifft ein Induktionsenergieübertragungssystem nach dem Oberbegriff des Anspruchs 1 und ein Verfahren zum Betrieb eines Induktionsenergieübertragungssystems nach dem Oberbegriff des Anspruchs 15.

Aus dem Stand der Technik sind bereits Induktionsenergieübertragungssysteme zur induktiven Übertragung von Energie von einer Primärspule einer Versorgungseinheit auf eine Sekundärspule einer Aufstelleinheit bekannt. Beispielsweise sind Induktionskochfelder bekannt, welche neben einer induktiven Beheizung von Gargeschirr auch zur induktiven Energieversorgung von Haushaltskleingeräten vorgesehen sind. Eine Steuerung der Versorgungseinheit durch eine Steuereinheit basiert dabei auf einem Parametersatz, wobei bei manchen bekannten Induktionsenergieübertragungssystemen zumindest ein Paramater des Parametersatzes, beispielsweise eine Eigeninduktivität der Sekundärspule, ein Energiebedarf oder eine elektrische Gesamtlast, drahtlos, beispielsweise per NFC, von der Aufstelleinheit an die Steuereinheit übertragen wird. Die Parameter des Parametersatzes, insbesondere die Aufstelleinheit betreffende Parameter, werden bei bisher bekannten Induktionsenergieübertragungssystemen als konstant angenommen und während eines Betriebs auftretende Veränderungen dieser Parameter werden bislang nicht berücksichtigt. Hierdurch ergeben sich nachteilig lange Reaktionszeiten bei der Inbetriebnahme oder bei Lastwechseln, eine geringe Effizienz bei der induktiven Energieübertragung sowie die Gefahr potentieller Beschädigungen von Komponenten, beispielsweise durch Überspannungen aufgrund zu ungenauer Parameter, wodurch ein Bedienkomfort für Nutzer bisher bekannter Induktionsenergieübertragungssysteme verringert ist.

EP2878169B1 offenbart ein Induktionsenergieübertragungssystem gemäß dem Oberbegriffs des Anspruchs 1.

Die Aufgabe der Erfindung besteht insbesondere, aber nicht beschränkt darauf, darin, eine gattungsgemäße Vorrichtung mit verbesserten Eigenschaften hinsichtlich eines Bedienkomforts bereitzustellen. Die Aufgabe wird erfindungsgemäß durch die Merkmale der Ansprüche 1 und 15 gelöst, während vorteilhafte Ausgestaltungen und Weiterbildungen der Erfindung den Unteransprüchen entnommen werden können.

Die Erfindung geht aus von einem Induktionsenergieübertragungssystem, insbesondere Induktionsgarsystem, mit einer Versorgungseinheit, welche zumindest ein Versorgungsinduktionselement zur induktiven Bereitstellung von Energie aufweist, mit einer Steuereinheit zur Steuerung der Versorgungseinheit, und mit zumindest einer Aufstelleinheit, welche zumindest eine Aufnahmeeinheit mit zumindest einem Aufnahmeinduktionselement zu einem Empfang der induktiv bereitgestellten Energie aufweist, wobei die Steuereinheit dazu vorgesehen ist, zur Steuerung der Versorgungseinheit einen Parametersatz heranzuziehen und zumindest einen Parameter des Parametersatzes von der Aufstelleinheit zu empfangen.

Es wird vorgeschlagen, dass die Steuereinheit dazu vorgesehen ist, zumindest einen Korrekturfaktor für zumindest einen Parameter des Parametersatzes zu bestimmen.

Durch eine derartige Ausgestaltung kann vorteilhaft ein Induktionsenergieübertragungssystem mit einem besonders hohen Bedienkomfort bereitgestellt werden. Es kann insbesondere eine Reaktionszeit bei einer Anpassung einer durch die Versorgungseinheit induktiv bereitgestellten Versorgungsleistung optimiert werden. Ferner können Änderungen einer induktiven Kopplung zwischen dem Versorgungsinduktionselement der Versorgungseinheit und dem Aufnahmeinduktionselement zuverlässig detektiert und bei der Steuerung der Versorgungseinheit berücksichtigt und eine besonders genaue Steuerung ermöglicht werden. Zudem kann vorteilhaft ein besonders effizienter Betrieb des Induktionsenergieübertragungssystems ermöglicht werden. Darüber hinaus kann vorteilhaft eine Sicherheit erhöht werden. Insbesondere können Überspannungen und damit einhergehende potentielle Beschädigungen von Komponenten des Induktionsenergieübertragungssystems verhindert werden.

Das Induktionsenergieübertragungssystem weist zumindest eine Hauptfunktionalität in Form einer drahtlosen Energieübertragung, insbesondere in einer drahtlosen Energieversorgung von Aufstelleinheiten, auf. In einer vorteilhaften Ausgestaltung ist das Induktionsenergieübertragungssystem als ein Induktionsgarsystem mit zumindest einer von einer reinen Garfunktion abweichenden weiteren Hauptfunktion, insbesondere zumindest einer Energieversorgung und einem Betrieb von Haushaltskleingeräten, ausgebildet. Beispielsweise könnte das Induktionsenergieübertragungssystem als ein Induktionsbackofensystem und/oder als ein Induktionsgrillsystem ausgebildet sein.

Insbesondere könnte die Versorgungseinheit als Teil eines Induktionsbackofens und/oder als Teil eines Induktionsgrills ausgebildet sein. Vorzugsweise ist das als Induktionsgarsystem ausgebildete Induktionsenergieübertragungssystem als ein Induktionskochfeldsystem ausgebildet. Die Versorgungseinheit ist dann insbesondere als Teil eines Induktionskochfelds ausgebildet. In einer weiteren vorteilhaften Ausgestaltung ist das Induktionsenergieübertragungssystem als ein Küchenenergieversorgungssystem ausgebildet und kann neben einer Hauptfunktion in Form einer Energieversorgung und eines Betriebs von Haushaltskleingeräten zusätzlich zur Bereitstellung von Garfunktionen vorgesehen sein.

Unter einer "Versorgungseinheit" soll eine Einheit verstanden werden, welche in wenigstens einem Betriebszustand induktiv Energie bereitstellt und welche insbesondere eine Hauptfunktionalität in Form einer Energiebereitstellung aufweist. Zu der Bereitstellung von Energie weist die Versorgungseinheit zumindest ein Versorgungsinduktionselement auf, welches insbesondere zumindest eine Spule, insbesondere zumindest eine Primärspule, aufweist und/oder als eine Spule ausgebildet ist und welches insbesondere in dem Betriebszustand induktiv Energie bereitstellt. Die Versorgungseinheit könnte zumindest zwei, insbesondere zumindest drei, vorteilhaft zumindest vier, besonders vorteilhaft zumindest fünf, vorzugsweise zumindest acht und besonders bevorzugt mehrere Versorgungsinduktionselemente aufweisen, welche in dem Betriebszustand jeweils induktiv Energie bereitstellen könnten, und zwar insbesondere an ein einziges Aufnahmeinduktionselement oder an zumindest zwei oder mehrere Aufnahmeinduktionselemente zumindest einer Aufstelleinheit und/oder zumindest einer weiteren Aufstelleinheit. Zumindest ein Teil der Versorgungsinduktionselemente könnten in einem Nahbereich zueinander angeordnet, beispielsweise in einer Reihe und/oder in Form einer Matrix angeordnet sein. Vorzugsweise weist die Versorgungseinheit zumindest einen Kompensationskondensator auf, welcher mit dem Versorgungsinduktionselement elektrisch parallel oder elektrisch in Reihe geschaltet sein kann, und welcher insbesondere zu einer Blindleistungskompensation vorgesehen sein kann.

Unter einer "Steuereinheit" soll eine elektronische Einheit verstanden werden, die dazu vorgesehen ist, zumindest die Versorgungseinheit zu steuern und/oder zu regeln. Die Steuereinheit umfasst eine Recheneinheit und insbesondere zusätzlich zur Recheneinheit eine Speichereinheit mit zumindest einem darin gespeicherten Steuer- und/oder Regelprogramm, das dazu vorgesehen ist, von der Recheneinheit ausgeführt zu werden. Die Steuereinheit weist zumindest eine Wechselrichtereinheit auf. Vorzugsweise führt die Wechselrichtereinheit in dem Betriebszustand eine Frequenzwandlung durch und wandelt insbesondere eine eingangsseitige niederfrequente Wechselspannung in eine ausgangsseitige hochfrequente Wechselspannung um. Vorzugsweise weist die niederfrequente Wechselspannung eine Frequenz von höchstens 100 Hz auf. Vorzugsweise weist die hochfrequente Wechselspannung eine Frequenz von mindestens 1000 Hz auf. Vorzugsweise ist die Wechselrichtereinheit dazu vorgesehen, die Einstellung der durch das zumindest eine Versorgungsinduktionselement induktiv bereitgestellten Energie durch Einstellung der hochfrequenten Wechselspannung vorzunehmen. Vorzugsweise umfasst die Steuereinheit zumindest einen Gleichrichter. Die Wechselrichtereinheit weist zumindest ein Wechselrichterschaltelement auf. Vorzugsweise erzeugt das Wechselrichterschaltelement zu einem Betrieb des zumindest einen Versorgungsinduktionselements einen oszillierenden elektrischen Strom, vorzugsweise mit einer Frequenz von zumindest 15 kHz, insbesondere von wenigstens 17 kHz und vorteilhaft von mindestens 20 kHz. Vorzugsweise umfasst die Wechselrichtereinheit zumindest zwei Wechselrichterschaltelemente, welche bevorzugt als Bipolartransistoren mit isolierter Gateelektrode ausgebildet sind und besonders vorteilhaft zumindest einen Dämpfungskondensator.

Unter einer "Aufstelleinheit" soll eine Einheit verstanden werden, welche in wenigstens einem Betriebszustand induktiv Energie empfängt und die induktiv empfangene Energie zumindest teilweise in zumindest eine weitere Energieform zur Bereitstellung zumindest einer Hauptfunktion umwandelt. Beispielsweise könnte die von der Aufstelleinheit induktiv empfangene Energie in dem Betriebszustand, insbesondere direkt, in zumindest eine weitere Energieform umgewandelt werden, wie beispielsweise in Wärme. Alternativ oder zusätzlich könnte die Aufstelleinheit zumindest einen elektrischen Verbraucher, beispielsweise einen Elektromotor oder dergleichen, aufweisen. Die Aufstelleinheit weist zumindest eine Aufnahmeeinheit mit einem Aufnahmeinduktionselement zu dem Empfang der induktiv bereitgestellten Energie auf. Die Aufnahmeeinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Aufnahmeinduktionselemente aufweisen, welche insbesondere in dem Betriebszustand jeweils induktiv Energie, insbesondere von dem Versorgungsinduktionselement, empfangen könnten. Die Aufstelleinheit könnte beispielsweise als ein Gargeschirr ausgebildet sein. Das Gargeschirr weist vorzugsweise zumindest einen Lebensmittelaufnahmeraum auf und wandelt die induktiv empfangene Energie in dem Betriebszustand zumindest teilweise in Wärme zu einer Beheizung von in dem Lebensmittelaufnahmeraum angeordneten Lebensmitteln um. Vorzugsweise weist die als Gargeschirr ausgebildete Aufstelleinheit zumindest eine weitere Einheit, zu einer Bereitstellung zumindest einer weiteren Funktion, welche über eine reine Beheizung von Lebensmitteln hinausgeht und/oder von einer Beheizung von Lebensmitteln abweicht, auf. Beispielsweise könnte die weitere Einheit als ein Temperatursensor oder als eine Rühreinheit oder dergleichen ausgebildet sein. Alternativ könnte die Aufstelleinheit als ein Haushaltskleingerät ausgebildet sein. Vorzugsweise handelt es sich bei dem Haushaltskleingerät um ein standortungebundenes Haushaltsgerät, welches zumindest das Aufnahmeinduktionselement und zumindest eine Funktionseinheit, welche in einem Betriebszustand zumindest eine Haushaltsgerätefunktion bereitstellt, aufweist. Unter "standortungebunden" soll in diesem Zusammenhang verstanden werden, dass das Haushaltskleingerät in einem Haushalt durch einen Nutzer frei, und insbesondere ohne Hilfsmittel, positionierbar ist, insbesondere im Unterschied zu einem Haushaltsgroßgerät, welches an einer bestimmten Position in einem Haushalt fest positioniert und/oder installiert ist, wie beispielsweise ein Backofen oder ein Kühlschrank. Vorzugsweise ist das Haushaltskleingerät als ein Küchenkleingerät ausgebildet und stellt in dem Betriebszustand zumindest eine Hauptfunktion zu einer Bearbeitung von Lebensmitteln bereit. Das Haushaltskleingerät könnte, ohne darauf beschränkt zu sein, beispielsweise als eine Küchenmaschine und/oder als ein Mixer und/oder als ein Rührer und/oder als eine Mühle und/oder als eine Küchenwaage oder als ein Wasserkocher oder als eine Kaffeemaschine oder als ein Reiskocher oder als ein Milchaufschäumer oder als eine Fritteuse oder als ein Toaster oder als ein Entsafter oder als eine Schneidemaschine oder dergleichen ausgebildet sein.

Das Aufnahmeinduktionselement der Aufnahmeeinheit umfasst zumindest eine Sekundärspule und/oder ist als eine Sekundärspule ausgebildet. In einem Betriebszustand der Aufstelleinheit versorgt das Aufnahmeinduktionselement zumindest einen Verbraucher der Aufstelleinheit mit elektrischer Energie. Darüber hinaus ist denkbar, dass die Aufstelleinheit einen Energiespeicher, insbesondere einen Akkumulator, aufweist, welcher dazu vorgesehen ist, eine über das Aufnahmeinduktionselement empfangene elektrische Energie in einem Ladezustand zu speichern und in einem Entladezustand zu der Versorgung der Funktionseinheit bereitzustellen. Vorzugsweise weist die Aufnahmeeinheit zumindest einen Kompensationskondensator auf, welcher mit dem Aufnahmeinduktionselement elektrisch parallel oder elektrisch in Reihe geschaltet ist, und welcher insbesondere zu einer Blindleistungskompensation vorgesehen sein kann.

Vorzugsweise weist das Induktionsenergieübertragungssystem zumindest eine Aufstellplatte zum Aufstellen der Aufstelleinheit auf. Unter einer "Aufstellplatte" soll zumindest eine, insbesondere plattenartige, Einheit verstanden werden, welche zu einem Aufstellen wenigstens einer Aufstelleinheit und/oder zu einem Auflegen wenigstens eines Garguts vorgesehen ist. Die Aufstellplatte könnte beispielsweise als eine Arbeitsplatte, insbesondere als eine Küchenarbeitsplatte, oder als ein Teilbereich zumindest einer Arbeitsplatte, insbesondere zumindest einer Küchenarbeitsplatte, insbesondere des Induktionsenergieübertragungssystems, ausgebildet sein. Alternativ oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und insbesondere gemeinsam mit zumindest einer Außengehäuseeinheit, mit welcher die als Kochfeldplatte ausgebildete Aufstellplatte in wenigstens einem montierten Zustand insbesondere verbunden sein könnte, das Kochfeldaußengehäuse wenigstens zu einem Großteil ausbilden. Vorzugsweise ist die Aufstellplatte aus einem nichtmetallischen Werkstoff hergestellt. Die Aufstellplatte könnte beispielsweise wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Kunststoff und/oder aus Keramik gebildet sein. In dem vorliegenden Dokument beziehen sich Lagebezeichnungen, wie beispielsweise "unterhalb" oder "oberhalb", auf einen montierten Zustand der Aufstellplatte, sofern dies nicht explizit anderweitig beschrieben ist. In dem montierten Zustand ist die Versorgungseinheit vorzugsweise unterhalb der Aufstellplatte angeordnet.

Vorzugsweise umfasst das Induktionsenergieübertragungssystem eine Kommunikationseinheit. Die Kommunikationseinheit ist vorzugsweise zu einer bidirektionalen drahtlosen Datenübertragung, das heißt sowohl zu einem drahtlosen Empfang als auch zu einem drahtlosen Senden von Daten zwischen der Steuereinheit und der Aufstelleinheit vorgesehen. Vorzugsweise weist die Kommunikationseinheit zumindest ein Kommunikationselement auf, welches mit der Steuereinheit verbunden und insbesondere zu einem drahtlosen Empfangen und Senden von Daten vorgesehen ist. Vorzugsweise weist die Kommunikationseinheit zumindest ein weiteres Kommunikationselement auf, welches innerhalb der Aufstelleinheit angeordnet und insbesondere zu einem drahtlosen Empfangen und Senden von Daten vorgesehen ist. Die Kommunikationseinheit könnte zu einer drahtlosen Datenübertragung zwischen der Aufstelleinheit und der Steuereinheit per RFID, oder per WIFI, oder per Bluetooth oder per ZigBee oder zur drahtlosen Datenübertragung nach einem anderen geeigneten Standard vorgesehen sein. Vorzugsweise ist die Kommunikationseinheit zu einer drahtlosen Datenübertragung zwischen der Aufstelleinheit und der Steuereinheit per NFC vorgesehen. Vorzugsweise ist die Steuereinheit dazu vorgesehen, den zumindest einen Parameter des Parametersatzes drahtlos von der Aufstelleinheit zu empfangen und zwar mittels der Kommunikationseinheit.

Unter einem "Parametersatz" soll eine Mehrzahl von zumindest zwei Parametern verstanden werden, welchen die Steuereinheit zur Steuerung der Versorgung heranzieht und anhand derer die Steuereinheit die durch die Versorgungseinheit induktiv bereitgestellte Energie entsprechend einer Art der Aufstelleinheit und/oder entsprechend eines, insbesondere durch einen Nutzer des Induktionsenergieübertragungssystems wählbaren, aktuellen Betriebszustands der Aufstelleinheit steuert. Der Parametersatz umfasst vorzugsweise zumindest eine konstante konstruktive und/oder geometrische Kenngröße des Versorgungsinduktionselements und/oder des Aufnahmeinduktionselements. Konstruktive und/oder geometrische Kenngrößen könnten dabei, ohne darauf beschränkt zu sein, beispielsweise eine Form und/oder Größe, insbesondere einen Radius und/oder Innendurchmesser und/oder einen Außendurchmesser, und/oder eine Querschnittsfläche und/oder eine Wicklungszahl und/oder ein Material und/oder eine räumliche Position des Aufnahmeinduktionselements innerhalb der Aufstelleinheit umfassen und/oder einen vertikalen Abstand des Versorgungsinduktionselements zu der Aufstellplatte und/oder dergleichen sein. Vorzugsweise umfasst zumindest ein Parameter des Betriebsparametersatzes eine, insbesondere zeitlich veränderliche, elektrische Kenngröße des Versorgungsinduktionselements und/oder des Aufnahmeinduktionselements, beispielsweise Beträge von elektrischen Widerständen und/oder Impedanzen in einem Primärschaltkreis der Versorgungseinheit und/oder in einem Sekundärschaltkreis der Aufnahmeeinheit und/oder Induktivitäten, insbesondere Eigeninduktivitäten, und/oder magnetische Flussdichten des Versorgungsinduktionselements und/oder des Aufnahmeinduktionselements und/oder eine Resonanzfrequenz und/oder eine Materialkonstante, beispielsweise eine magnetische Permeabilität eines magnetischen Flussbündelungselements der Versorgungseinheit und/oder der Aufnahmeeinheit. Ferner kann zumindest ein Parameter des Betriebsparametersatzes zumindest eine Betriebskenngröße der Aufstelleinheit, beispielsweise eine Maximalleistung und/oder eine Minimalleistung und/oder Anzahl von Leistungsstufen und/oder eine Anzahl und/oder Art von betreibbaren elektrischen Lasten und/oder eine in einem Betriebszustand benötigte Spannung und/oder Stromstärke umfassen.

Die Steuereinheit kann dazu vorgesehen sein, den Korrekturfaktor rechnerisch zu bestimmen. Denkbar ist auch, dass die Steuereinheit dazu vorgesehen ist, den Korrekturfaktor aus innerhalb der Speichereinheit gespeicherten Daten, beispielsweise gespeicherten Messdaten oder dergleichen, abzuleiten. Vorzugsweise ist die Steuereinheit dazu vorgesehen, mehrere Korrekturfaktoren für verschiedene Parameter des Parametersatzes, bevorzugt für jeden zeitlich veränderlichen Parameter des Parametersatzes, zu bestimmen.

In dem vorliegenden Dokument dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "vorgesehen" soll speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass die Steuereinheit dazu vorgesehen ist, zur Bestimmung des Korrekturfaktors zumindest einen Koppelfaktor zwischen dem Aufnahmeinduktionselement und dem Versorgungsinduktionselement zu bestimmen. Hierdurch kann vorteilhaft eine hinreichend genaue Bestimmung des Korrekturfaktors mit einfachen technischen Mitteln erreicht werden. Der Koppelfaktor beschreibt einen Anteil eines magnetischen Flusses, welcher von dem Versorgungsinduktionselement und dem Aufnahmeinduktionselement in dem Betriebszustand geteilt werden und Werte zwischen 0 und 1 annehmen kann, wobei ein Wert von 1 eine ideale magnetische Kopplung beschreibt, welche in der Praxis aufgrund von magnetischen Streuflüssen nicht erreichbar ist. Vorzugsweise ist die Steuereinheit dazu vorgesehen, den zumindest einen Kopplungsfaktor rechnerisch zu bestimmen und zwar mittels der Recheneinheit.

Zudem wird vorgeschlagen, dass die Steuereinheit dazu vorgesehen ist, zur Bestimmung des Korrekturfaktors eine Ersatzimpedanz zwischen der Versorgungseinheit und der Aufnahmeeinheit heranzuziehen. Durch eine derartige Ausgestaltung kann vorteilhaft eine besonders einfache und zuverlässige Bestimmung des zumindest einen Koppelfaktors erreicht werden. Die Ersatzimpedanz zwischen der Versorgungseinheit und der Aufnahmeeinheit beschreibt eine gesamte Impedanz eines gedachten gemeinsamen elektrischen Schaltkreises der Aufnahmeeinheit und der Versorgungseinheit während einer induktiven Energieübertragung des Versorgungsinduktionselements an das Aufnahmeinduktionselement. Vorzugsweise ist die Steuereinheit dazu vorgesehen, die Ersatzimpedanz in dem Betriebszustand an einem das Versorgungsinduktionselement umfassenden Primärschaltkreis zu messen, wobei die Steuereinheit hierzu entsprechende Messeinrichtungen aufweisen kann.

Des Weiteren wird vorgeschlagen, dass die Steuereinheit dazu vorgesehen ist, einen Ersatzwiderstand aus dem Realteil der Ersatzimpedanz zu bestimmen. Hierdurch kann vorteilhaft eine Bestimmung des zumindest einen Koppelfaktors weiter verbessert werden. Der Ersatzwiderstand beschreibt dabei die ohmschen Anteile der gesamten Impedanz des gedachten gemeinsamen elektrischen Schaltkreises der Aufnahmeeinheit und der Versorgungseinheit während einer induktiven Energieübertragung des Versorgungsinduktionselements an das Aufnahmeinduktionselement.

Darüber hinaus wird vorgeschlagen, dass die Steuereinheit dazu vorgesehen ist, eine Ersatzinduktivität aus dem Imaginärteil der Ersatzimpedanz zu bestimmen. Hierdurch kann vorteilhaft eine Bestimmung des zumindest einen Koppelfaktors weiter verbessert werden. Die Ersatzinduktivität beschreibt dabei die induktiven Anteile der gesamten Impedanz des gedachten gemeinsamen elektrischen Schaltkreises der Aufnahmeeinheit und der Versorgungseinheit während einer induktiven Energieübertragung des Versorgungsinduktionselements an das Aufnahmeinduktionselement.

Zudem wird vorgeschlagen, dass die Steuereinheit dazu vorgesehen ist, einen ersten Koppelfaktor zwischen der Versorgungseinheit und der Aufnahmeeinheit aus dem Ersatzwiderstand zu bestimmen. Hierdurch kann vorteilhaft eine besonders einfache und zuverlässige Bestimmung des ersten Koppelfaktors ermöglicht werden. Ferner wird vorgeschlagen, dass die Steuereinheit dazu vorgesehen ist, einen zweiten Koppelfaktor zwischen der Versorgungseinheit und der Aufnahmeeinheit aus der Ersatzinduktivität zu bestimmen. Hierdurch kann vorteilhaft eine besonders einfache und zuverlässige Bestimmung des zweiten Koppelfaktors ermöglicht werden. Darüber hinaus wird vorgeschlagen, dass die Steuereinheit dazu vorgesehen ist, den Korrekturfaktor aus einem Vergleich zwischen dem ersten Koppelfaktor und dem zweiten Koppelfaktor zu bestimmen. Hierdurch kann vorteilhaft eine besonders einfache, schnelle und zuverlässige Bestimmung des zumindest einen Korrekturfaktors ermöglicht werden.

In einer weiteren vorteilhaften Ausgestaltung wird vorgeschlagen, dass die Steuereinheit dazu vorgesehen ist, zur Berechnung eines Koppelfaktors zumindest eine Transformatorgleichung heranzuziehen. Durch eine derartige Ausgestaltung kann vorteilhaft eine alternative oder zusätzliche Möglichkeit zur Bestimmung des zumindest einen Koppelfaktors ermöglicht werden. Vorzugsweise ist die Steuereinheit dazu vorgesehen, zur Berechnung eines Koppelfaktors zumindest eine erste Transformatorgleichung, welche eine das Versorgungsinduktionselement umfassende Primärseite eines gedachten Transformators umfasst, und zumindest eine zweite Transformatorgleichung, welche eine das Aufnahmeinduktionselement umfassende Sekundärseite des gedachten Transformators umfasst, heranzuziehen.

Des Weiteren wird vorgeschlagen, dass die Steuereinheit dazu vorgesehen ist, bei der Bestimmung des Korrekturfaktors einen vertikalen Abstand zwischen dem Versorgungsinduktionselement und dem Aufnahmeinduktionselement zu berücksichtigen. Hierdurch kann vorteilhaft eine besonders genaue Bestimmung des Korrekturfaktors und somit ein besonders effizienter und zuverlässiger Betrieb ermöglicht werden. Die Steuereinheit kann dazu vorgesehen sein, den vertikalen Abstand rechnerisch zu ermitteln. Beispielsweise könnte ein vertikaler Abstand zwischen dem Versorgungsinduktionselement und der Aufstellplatte in der Speichereinheit gespeichert sein und die Aufstelleinheit könnte einen vertikalen Abstand zwischen dem Aufnahmeinduktionselement und einer Unterkante der Aufstellplatte drahtlos mittels der Kommunikationseinheit an die Steuereinheit übermitteln, wobei die Steuereinheit den vertikalen Abstand zwischen dem Versorgungsinduktionselement und dem Aufnahmeinduktionselement durch Addition der vorhergenannten Abstände ermitteln könnte. Denkbar ist auch, dass in der Speichereinheit Messwerte gespeichert sind, welche eine Korrelation zwischen dem zumindest einen Kopplungsfaktor und verschiedenen vertikalen Abständen zwischen dem Versorgungsinduktionselement und dem Aufnahmeinduktionselement beinhalten, wobei die Steuereinheit einen aktuellen vertikalen Abstand zwischen dem Versorgungsinduktionselement und dem Aufnahmeinduktionselement aus dem zuvor bestimmten Kopplungsfaktor ermitteln kann. Darüber hinaus kann die Steuereinheit dazu vorgesehen sein, eine horizontale Verschiebung zwischen einem geometrischen Mittelpunkt des Versorgungsinduktionselements und einem geometrischen Mittelpunkt des Aufnahmeinduktionselement bei der Bestimmung des Korrekturfaktors zu berücksichtigen.

Zudem wird vorgeschlagen, dass die Steuereinheit dazu vorgesehen ist, bei der Bestimmung des Korrekturfaktors, eine magnetische Permeabilität eines magnetischen Flussbündelungselements der Versorgungseinheit und/oder Aufnahmeeinheit zu berücksichtigen. Hierdurch kann vorteilhaft eine Genauigkeit bei der Bestimmung des Korrekturfaktors weiter verbessert werden. Vorzugsweise ist die magnetische Permeabilität des magnetischen Flussbündelungselements der Versorgungseinheit in der Speichereinheit gespeichert. Vorzugsweise ist die Steuereinheit dazu vorgesehen, die magnetische Permeabilität des magnetischen Flussbündelungselements der Aufnahmeeinheit drahtlos von der Aufstelleinheit zu empfangen.

Ferner wird vorgeschlagen, dass der Parametersatz eine Eigeninduktivität des Versorgungsinduktionselements umfasst. Hierdurch kann vorteilhaft ein wichtiger Parameter des Parametersatzes zur Steuerung der Versorgungseinheit, welcher in einem Betriebszustand starken Schwankungen unterworfen sein kann, berücksichtigt und mittels des Korrekturfaktors korrigiert werden. Es kann somit vorteilhaft ein besonders effizienter Betrieb ermöglicht werden. Zudem wird vorgeschlagen, dass der Parametersatz eine Eigeninduktivität des Aufnahmeinduktionselements umfasst. Durch eine derartige Ausgestaltung kann vorteilhaft ein weiterer wichtiger Parameter des Parametersatzes, welcher in einem Betriebszustand ebenfalls starken Schwankungen unterworfen sein kann, bei der Steuerung der Versorgungseinheit herangezogen und mittels des Korrekturfaktors korrigiert werden, wodurch vorteilhaft eine Effizienz weiter verbessert werden kann. Des Weiteren wird vorgeschlagen, dass der Parametersatz eine Gegeninduktivität zwischen dem Versorgungsinduktionselement und dem Aufnahmeinduktionselement umfasst. Wenn der Parametersatz eine Gegeninduktivität zwischen dem Versorgungsinduktionselement und dem Aufnahmeinduktionselement umfasst, kann vorteilhaft eine Genauigkeit bei der Steuerung der Versorgungseinheit verbessert und eine Effizienz im Betrieb des Induktionsenergieübertragungssystems noch weiter verbessert werden.

Die Erfindung geht ferner aus von einem Verfahren zum Betrieb eines Induktionsenergieübertragungssystems, insbesondere nach einer der vorhergehend beschriebenen Ausgestaltungen, mit einer Versorgungseinheit, welche zumindest ein Versorgungsinduktionselement zur induktiven Bereitstellung von Energie aufweist, und mit zumindest einer Aufstelleinheit, welche zumindest eine Aufnahmeeinheit mit zumindest einem Aufnahmeinduktionselement zu einem Empfang der induktiv bereitgestellten Energie aufweist, wobei zur Steuerung der Versorgungseinheit ein Parametersatz herangezogen wird und zumindest ein Parameter des Parametersatzes von der Aufstelleinheit empfangen wird.

Es wird vorgeschlagen, dass zumindest ein Korrekturfaktor für zumindest einen Parameter des Parametersatzes bestimmt wird. Mittels eines derartigen Verfahrens kann vorteilhaft ein besonders benutzerfreundlicher, effizienter und sicherer Betrieb des Induktionsenergieübertragungssystems ermöglicht werden.

Das Induktionsenergieübertragungssystem soll hierbei nicht auf die oben beschriebene Anwendung und Ausführungsform beschränkt sein. Insbesondere kann das Induktionsenergieübertragungssystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:

Fig. 1 Ein Induktionsenergieübertragungssystem mit einer Versorgungseinheit, einer Steuereinheit zur Steuerung der Versorgungseinheit, einer Aufstelleinheit und einer weiteren Aufstelleinheit, welche jeweils eine Aufnahmeeinheit umfassen, in einer schematischen Darstellung,

Fig. 2 ein schematisches Blockschaltbild zur Darstellung einer Funktionsweise der Steuereinheit,

Fig. 3 ein schematisches elektrisches Ersatzschaltbild zur Darstellung einer induktiven Energieübertragung zwischen einem Versorgungsinduktionselement der Versorgungseinheit und einem Aufnahmeinduktionselement der Aufstelleinheit,

Fig. 4 ein schematisches elektrisches T-Ersatzschaltbild des schematischen elektrischen Ersatzschaltbilds aus der Figur 3,

Fig. 5 vier schematische Diagramme zur Darstellung von Einflussgrößen auf Parameter eines Parametersatzes, welchen die Steuereinheit in einem Betriebszustand zur Steuerung der Versorgungseinheit heranzieht,

Fig. 6 eine schematische Darstellung des Versorgungselements der Versorgungseinheit und eines Aufnahmeinduktionselements der weiteren Aufstelleinheit zusammen mit einem magnetischen Flussbündelungselement der Versorgungseinheit und einem magnetischen Flussbündelungselement der Aufnahmeeinheit der weiteren Aufstelleinheit,

Fig. 7 zwei schematische Diagramme zur Darstellung weiterer Einflussgrößen auf die Parameter des Parametersatzes und

Fig. 8 ein schematisches Verfahrensfließbild eines Verfahrens zum Betrieb des Induktionsenergieübertragungssystems.

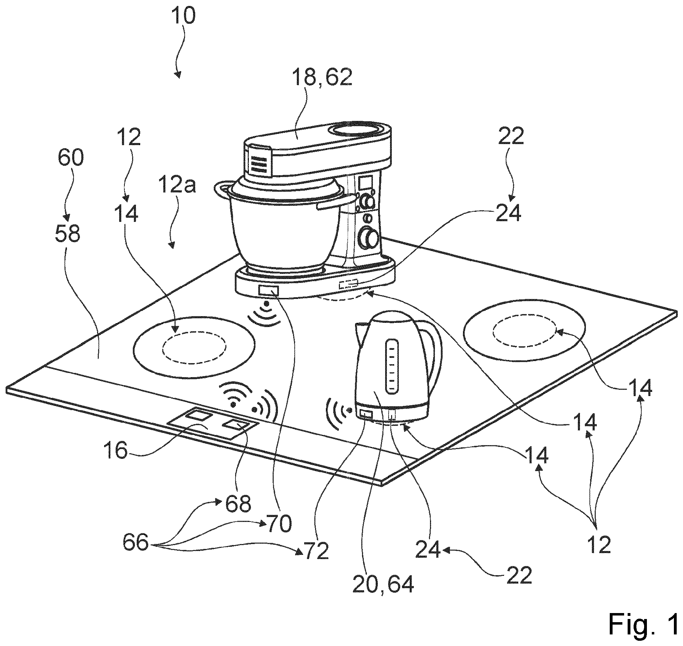

Figur 1 zeigt ein Induktionsenergieübertragungssystem 10 in einer schematischen Darstellung. Das Induktionsenergieübertragungssystem 10 weist eine Versorgungseinheit 12 auf. Die Versorgungseinheit 12 weist zumindest ein Versorgungsinduktionselement 14 zur induktiven Bereitstellung von Energie auf. Vorliegend umfasst die Versorgungseinheit 12 insgesamt vier Versorgungsinduktionselemente 14, wobei jede beliebige andere Anzahl denkbar wäre.

Das Induktionsenergieübertragungssystem 10 weist eine Aufstelleinheit 18 auf. Die Aufstelleinheit 18 weist eine Aufnahmeeinheit 22 mit einem Aufnahmeinduktionselement 24 zu einem Empfang der durch die Versorgungseinheit 12 induktiv bereitgestellten Energie auf. Vorliegend ist die Aufstelleinheit 18 als ein Haushaltskleingerät 62 ausgebildet, und zwar als eine Küchenmaschine. Das Induktionsenergieübertragungssystem 10 weist vorliegend eine weitere Aufstelleinheit 20 auf. Die weitere Aufstelleinheit 20 umfasst ebenfalls eine Aufnahmeeinheit 22 mit einem Aufnahmeinduktionselement 24 zu einem Empfang der durch die Versorgungseinheit 12 induktiv bereitgestellten Energie. Die weitere Aufstelleinheit 20 ist vorliegend als ein weiteres Haushaltskleingerät 64 ausgebildet, und zwar als ein Wasserkocher.

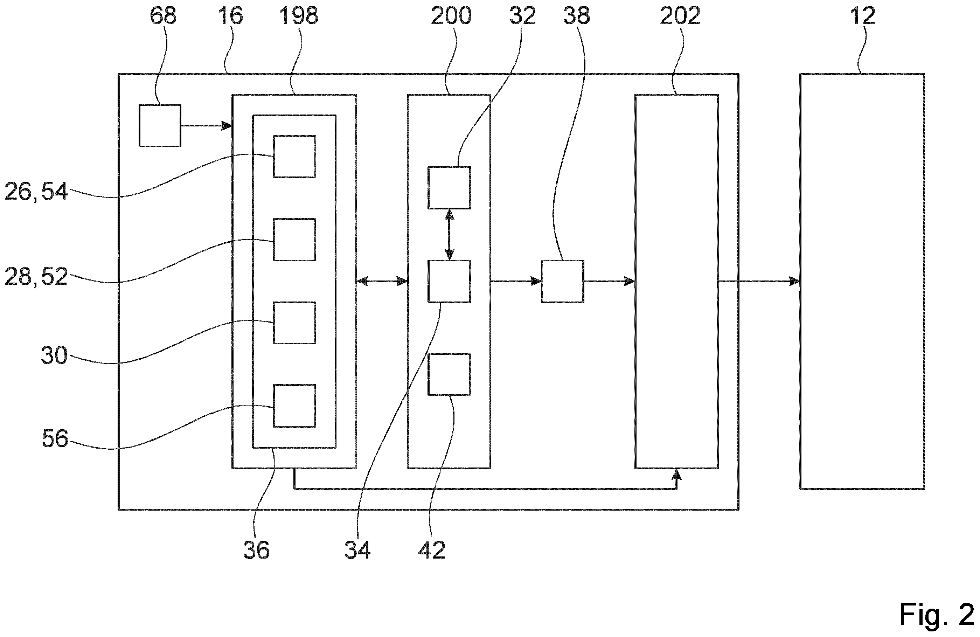

Das Induktionsenergieübertragungssystem 10 weist eine Steuereinheit 16 zur Steuerung der Versorgungseinheit 12 auf. Die Steuereinheit 16 ist dazu vorgesehen, zur Steuerung der Versorgungseinheit 12 einen Parametersatz 36 (vgl. Figur 2) heranzuziehen und zumindest einen Parameter 26 (vgl. Figur 2) des Parametersatzes 36 von der Aufnahmeeinheit 22 zu empfangen.

Das Induktionsenergieübertragungssystem 10 weist eine Aufstellplatte 58 zum Aufstellen der Aufstelleinheit 18, 20 auf.

Das Induktionsenergieübertragungssystem 10 ist vorliegend als ein Induktionsgarsystem ausgebildet und umfasst ein Induktionskochfeld 60. Vorliegend ist die Aufstellplatte 58 als eine Kochfeldplatte des Induktionskochfelds 60 ausgebildet.

Das Induktionsenergieübertragungssystem 10 weist eine Kommunikationseinheit 66 auf. Die Kommunikationseinheit 66 ist zu einer drahtlosen Datenübertragung zwischen der Aufstelleinheit 18 und der Steuereinheit 16 vorgesehen. Vorliegend ist die Kommunikationseinheit 66 außerdem auch zu einer drahtlosen Datenübertragung zwischen der weiteren Aufstelleinheit 20 und der Steuereinheit 16 vorgesehen. Die Kommunikationseinheit 66 weist ein Kommunikationselement 68 auf, welches mit der Steuereinheit 16 verbunden und zu einem drahtlosen Senden und Empfangen von Daten vorgesehen ist. Die Kommunikationseinheit 66 weist ein weiteres Kommunikationselement 70 auf, welches in der Aufstelleinheit 18 angeordnet und zu einem drahtlosen Senden und Empfangen von Daten vorgesehen ist. Die Kommunikationseinheit 66 weist außerdem ein weiteres Kommunikationselement 72 auf, welches in der weiteren Aufstelleinheit 20 angeordnet und zu einem drahtlosen Senden und Empfangen von Daten vorgesehen ist. Vorliegend ist die Kommunikationseinheit 66 als eine NFC-Kommunikationseinheit ausgebildet, und zu einer drahtlosen Datenübertagung per NFC zwischen der Steuereinheit 16 und der Aufstelleinheit 18 und/oder der weiteren Aufstelleinheit 20 vorgesehen.

Figur 2 zeigt ein schematisches Blockschaltbild zur Darstellung einer Funktionsweise der Steuereinheit 16. Die Steuereinheit 16 umfasst eine Speichereinheit 198 und eine Recheneinheit 200. Die Steuereinheit 16 umfasst zur Steuerung und Energieversorgung der Versorgungseinheit 12 ferner eine Wechselrichtereinheit 202.

In einem Betriebszustand des Induktionsenergieübertragungssystems 10 empfängt die Steuereinheit 16 den zumindest einen Parameter 26 der Aufstelleinheit 18 drahtlos und zwar über das Kommunikationselement 68 der Kommunikationseinheit 66 und speichert diesen in der Speichereinheit 198 ab. In der Speichereinheit 198 der Steuereinheit 16 sind außerdem weitere Parameter 28, 30 des Parametersatzes 36 gespeichert. Der Parametersatz 36 umfasst eine Eigeninduktivität 52 des Versorgungsinduktionselements 14. Der Parametersatz 36 umfasst ferner eine Eigeninduktivität 54 des Aufnahmeinduktionselements 24. Der Parametersatz 36 umfasst außerdem eine Gegeninduktivität 56 zwischen dem Versorgungsinduktionselement 14 und dem Aufnahmeinduktionselement 24. Beispielsweise könnte es sich bei dem drahtlos von der Aufnahmeeinheit 18 empfangenen Parameter 26 um die Eigeninduktivität 54 des Aufnahmeinduktionselements 24 handeln. Bei dem weiteren Parameter 28 könnte es sich beispielsweise um die Eigeninduktivität 52 des Versorgungsinduktionselements 14 handeln. Der Parametersatz 36 kann neben den Parametern 26, 28, 30 zusätzliche Parameter (nicht dargestellt) umfassen, welche ebenfalls in der Speichereinheit 198 gespeichert und/oder durch die Steuereinheit 16 über das Kommunikationselement 68 drahtlos von der Aufstelleinheit 18 empfangen werden können. Ferner kann die Recheneinheit 200 dazu vorgesehen sein, manche der zusätzlichen Parameter des Parametersatzes 36 aus anderen Parametern, beispielsweise den Paramatern 26, 28, 30, zu berechnen.

Die Steuereinheit 16 ist dazu vorgesehen, zumindest einen Korrekturfaktor 38 für zumindest einen Parameter 26, 28, 30 des Parametersatzes 36 zu bestimmen. Die Bestimmung des zumindest einen Korrekturfaktors 38 erfolgt mittels der Recheneinheit 200.

Die Steuereinheit 16 ist dazu vorgesehen, zur Bestimmung des Korrekturfaktors 38 zumindest einen Koppelfaktor 32, 34, 42 zwischen dem Aufnahmeinduktionselement 24 und dem Versorgungsinduktionselement 14 zu bestimmen.

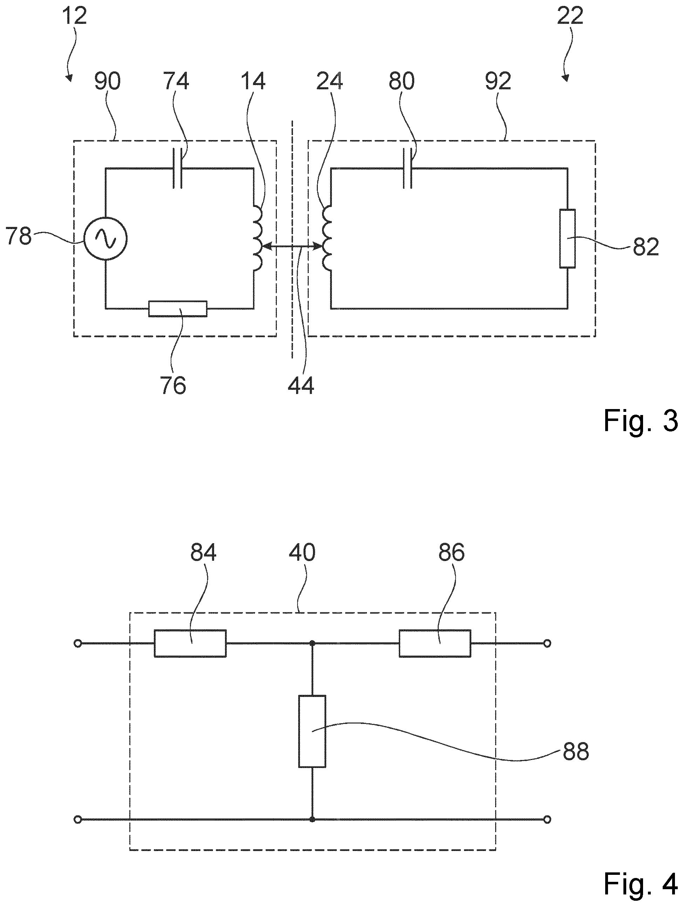

Figur 3 zeigt ein vereinfachtes schematisches elektrisches Schaltbild zur Darstellung einer induktiven Energieübertragung zwischen dem Versorgungsinduktionselement 14 der Versorgungseinheit 12 und dem Aufnahmeinduktionselement 24 der Aufnahmeeinheit 22 der Aufstelleinheit 18, welche zueinander in einem vertikalen Abstand 44 angeordnet sind. Ein Teil der Versorgungseinheit 12 ist in der Figur 3 als ein Primärschaltkreis 90 dargestellt. Der Primärschaltkreis 90 umfasst neben dem Versorgungsinduktionselement 14 einen Kompensationskondensator 74 und einen elektrischen Widerstand 76. Der Primärschaltkreis 90 umfasst außerdem eine Wechselspannungsquelle 78, welche mit dem Kompensationskondensator 74, dem Versorgungsinduktionselement 14 und dem elektrischen Widerstand 76 in Reihe geschaltet ist. Der elektrische Widerstand 76 repräsentiert die elektrischen Verluste im Betrieb des Primärschaltkreises 90. Zumindest ein Wechselrichter (nicht dargestellt) der Wechselrichtereinheit 202 (vgl. Figur 2) kann als die Wechselspannungsquelle 78 in dem Primärschaltkreis 90 aufgefasst werden.

Die Aufnahmeeinheit 22 der Aufstelleinheit 18 ist in der Figur 3 als ein Sekundärschaltkreis 92 dargestellt, welcher das Aufnahmeinduktionselement 24 sowie einen dazu in Reihe geschalteten Kompensationskondensator 80 und einen elektrischen Widerstand 82 umfasst. Der elektrische Widerstand 82 stellt die gesamte elektrische Last in einem Betriebszustand der Aufstelleinheit 18 dar, wobei vereinfacht von einer rein ohmschen Last ausgegangen wird. Selbstverständlich wäre das Induktionsenergieübertragungssystem 10 auch zu einem Betrieb von Aufstelleinheiten mit einer gesamten elektrischen Last, welche sich aus ohmschen Lasten und kapazitiven Lasten und/oder induktiven Lasten zusammensetzt, geeignet, da diese Lasten durch die Recheneinheit 200 der Steuereinheit 16 in eine äquivalente rein-ohmsche Last umgerechnet werden können.

Das in Figur 3 dargestellte schematische elektrische Ersatzschaltbild kann in der Netzwerktheorie als ein Zweitor betrachtet werden. Figur 4 zeigt ein schematisches T-Ersatzschaltbild eines Zweitors des in der Figur 2 gezeigten schematischen elektrischen Ersatzschaltbilds.

Die Steuereinheit 16 ist dazu vorgesehen, zur Bestimmung des zumindest einen Korrekturfaktors 38 eine Ersatzimpedanz 40 zwischen der Versorgungseinheit 12 und der Aufnahmeeinheit 22 heranzuziehen. Die Ersatzimpedanz 40 beschreibt dabei eine gesamte Impedanz des Primärschaltkreises 90 und des Sekundärschaltkreises 92 des in der Figur 3 dargestellten vereinfachten Ersatzschaltbilds bei einer induktiven Energieübertragung zwischen dem Versorgungsinduktionselement 14 der Versorgungseinheit 12 und dem Aufnahmeinduktionselement 24 der Aufnahmeeinheit 22. In dem T-Ersatzschaltbild der Figur 4 setzt sich die Ersatzimpedanz 40 aus einer Ersatzimpedanz 84 für den Primärschaltkreis 90, einer Ersatzimpedanz 86 für den Sekundärschaltkreis 92 und einer Ersatzimpedanz 88, welche die auftretende Gegeninduktivität 56 (vgl. Figur 2) zwischen dem Versorgungsinduktionselement 14 und dem Aufnahmeinduktionselement 24 während der induktiven Energieübertragung berücksichtigt, zusammen.

Die induktive Energieübertragung zwischen dem Versorgungsinduktionselement 14 und dem Aufnahmeinduktionselement 24 kann durch die Recheneinheit 200 der Steuereinheit 16 anhand des nachfolgenden Gleichungssystems (1) modelliert werden:

$$\begin{pmatrix} Z_{11} & Z_{12} \\ Z_{21} & Z_{22} \end{pmatrix} \begin{pmatrix} I_1 \\ I_2 \end{pmatrix} = \begin{pmatrix} V \\ 0 \end{pmatrix}, \qquad\qquad (1)$$

wobei $Z_{11}$ eine Eigenimpedanz des Primärschaltkreises 90, $Z_{22}$ eine Eigenimpedanz des Sekundärschaltkreises 92, $Z_{12}$ eine bei der induktiven Energieübertragung in dem Aufnahmeinduktionselement 24 durch das Versorgungsinduktionselement 14 induzierte Gegenimpedanz und $Z_{21}$ eine bei der induktiven Energieübertragung in dem Versorgungsinduktionselement 14 durch das Aufnahmeinduktionselement 24 induzierte Gegenimpedanz darstellen. Ferner stellt $I_1$ einen in dem Betriebszustand in dem Primärschaltkreis 90 durch das Versorgungsinduktionselement 14 fließenden Wechselstrom, $I_2$ einen in dem Sekundärschaltkreis 92 durch das Aufnahmeinduktionselement 24 fließenden Wechselstrom und V die von der Wechselspannungsquelle 78 bereitgestellte Wechselspannung dar. Da die Gegenimpedanzen $Z_{12}$ und $Z_{21}$ vorliegend denselben Betrag haben, kann das Gleichungssystem (1) wie folgt zu dem Gleichungssystem (1') vereinfacht werden:

$$\begin{pmatrix} Z_{11} & Z_{12} \\ Z_{12} & Z_{22} \end{pmatrix} \begin{pmatrix} I_1 \\ I_2 \end{pmatrix} = \begin{pmatrix} V \\ 0 \end{pmatrix}, \tag{2'}$$

Ferner gelten die in den nachfolgenden Gleichungen (2) bis (5) dargestellten Zusammenhänge, wobei Wicklungsverluste des Versorgungsinduktionselements 14 und des Aufnahmeinduktionselements 24 sowie Wärmeverluste vernachlässigt werden:

$$Z_{11} = j\omega L_{11} - j\frac{1}{\omega C_1}, \tag{3}$$

$$Z_{12} = j\omega L_{12}, \tag{4}$$

$$Z_{22} = R_{Load} + j\omega L_{22} - j\frac{1}{\omega C_2}, \tag{5}$$

$$\omega = 2\pi f \tag{6}$$

In den Gleichungen (2) bis (5) steht j für die imaginäre Einheit, $\omega$ für die Kreisfrequenz, $L_{11}$ für die Eigeninduktivität 52 (vgl. Figur 2) des Versorgungsinduktionselements 14, $C_1$ für die Kapazität des Kondensators 74 im Primärschaltkreis 90 (vgl. Figur 3), $L_{22}$ für die Eigeninduktivität 54 (vgl. Figur 2) des Aufnahmeinduktionselements 24, $L_{12}$ für die Gegeninduktivität 56 (vgl. Figur 2), $R_{Load}$ für den elektrischen Widerstand 82 und $C_2$ für die Kapazität des Kompensationskondensators 80 im Sekundärschaltkreis 92 (vgl. Figur 3), $\pi$ für die Kreiszahl und f für die Frequenz der durch die Wechselspannungsquelle 78 (vgl. Figur 3) bereitgestellten Wechselspannung.

Wie oben ausgeführt ist die Steuereinheit 16 dazu vorgesehen, zur Bestimmung des Korrekturfaktors 38 die Ersatzimpedanz 40 (vgl. Figur 4) zwischen der Versorgungseinheit 12 und der Aufnahmeeinheit 22 heranzuziehen. Die Ersatzimpedanz 40 kann durch die Steuereinheit 16 durch Messung an dem Primärschaltkreis 90 bestimmt werden. Unter Verwendung der Kirchhoffschen Regeln kann für die Ersatzimpedanz 40 folgende Gleichung (6) aufgestellt werden:

$$Z_{eq} = \frac{V}{I_1} = Z_{11} - \frac{Z_{12}^2}{Z_{22}}. \tag{6}$$

wobei in der Gleichung (6) das Formelzeichen $Z_{eq}$ für die Ersatzimpedanz 40 steht.

Für die Berechnung des zumindest einen Koppelfaktors 32, 34 kann das in der Figur 3 dargestellte vereinfachte elektrische Ersatzschaltbild oder alternativ auch das in Figur 4 gezeigte schematisches T-Ersatzschaltbild des Zweitors des in der Figur 3 gezeigten vereinfachten elektrischen Ersatzschaltbilds herangezogen werden. Die Ersatzimpedanz 40 beschreibt dabei eine gesamte Impedanz des Primärschaltkreises 90 und des Sekundärschaltkreises 92 des in der Figur 3 dargestellten vereinfachten Ersatzschaltbilds bei einer induktiven Energieübertragung zwischen dem Versorgungsinduktionselement 14 der Versorgungseinheit 12 und dem Aufnahmeinduktionselement 24 der Aufnahmeeinheit 22. In Figur 3 repräsentiert dabei die Ersatzimpedanz 84 die Differenz zwischen der Eigenimpedanz $Z_{11}$ des Primärschaltkreises 90 und der Gegeninduktivität $Z_{12}$, die Ersatzimpedanz 86 die Differenz zwischen der Eigenimpedanz $Z_{22}$ des Sekundärschalkreises 92 und der Gegeninduktivität $Z_{12}$ und die Ersatzimpedanz 88 die Gegeninduktivität $Z_{12}$, sodass sich obige Gleichung (6) alternativ zur Verwendung der Kirchhoffschen Regeln auch direkt aus dem T-Ersatzschaltbild ableiten lässt.

Ferner ist die Ersatzimpedanz 40 eine komplexe Größe und lässt sich daher auch in Form der folgenden Gleichung (7) darstellen:

$$Z_{eq} = R_{eq} + j\omega L_{eq} - j\frac{1}{\omega C_1}. \tag{7}$$

wobei $Z_{eq}$ für die Ersatzimpedanz 40, $R_{eq}$ für einen Ersatzwiderstand (nicht dargestellt) und $L_{eq}$ für eine Ersatzinduktivität (nicht dargestellt) der in den Figuren 3 und 4 gezeigten schematischen Schaltkreise stehen.

Die Steuereinheit 16 ist dazu vorgesehen, den Ersatzwiderstand $R_{eq}$ aus dem Realteil der Ersatzimpedanz 40 zu bestimmen. Aus der Gleichung (7) lässt sich unter Verwendung der Gleichungen (2), (3), (4), (6) die folgende Gleichung (8) zur Bestimmung des Ersatzwiderstandes $R_{eq}$ ableiten:

$$R_{\mathrm{eq}} = \frac{\omega^2 L_{12}^2 R_{\mathrm{load}}}{R_{\mathrm{load}}^2 + \left(\omega L_{22} - \dfrac{1}{\omega C_2}\right)^2}, \tag{8}$$

Die Steuereinheit 16 ist ferner dazu vorgesehen, die Ersatzinduktivität $L_{eq}$ aus dem Imaginärteil der Ersatzimpedanz 40 zu bestimmen. Aus der Gleichung (7) lässt sich unter Verwendung der Gleichungen (2), (3), (4), (6) die folgende Gleichung (9) zur Bestimmung der Ersatzinduktivität ableiten:

$$L_{\mathrm{eq}} = L_{11} - \frac{\omega L_{12}^2 \left(\omega L_{22} - \dfrac{1}{\omega C_2}\right)}{R_{\mathrm{load}}^2 + \left(\omega L_{22} - \dfrac{1}{\omega C_2}\right)^2}. \tag{9}$$

Die Steuereinheit 16 ist dazu vorgesehen, einen ersten Koppelfaktor 32 zwischen der Versorgungseinheit 12 und der Aufnahmeeinheit 22 aus dem Ersatzwiderstand $R_{eq}$ zu bestimmen. Die Steuereinheit 16 ist außerdem dazu vorgesehen, einen zweiten Koppelfaktor 34 zwischen der Versorgungseinheit 12 und der Aufnahmeeinheit 22 aus der Ersatzinduktivität $L_{eq}$ zu bestimmen. Zwischen der Eigeninduktivität $L_{11}$ des Versorgungsinduktionselements 14, der Eigeninduktivität $L_{22}$ des Aufnahmeinduktionselements 24, der Gegeninduktivität $L_{12}$ und dem ersten Koppelfaktor 32 beziehungsweise dem zweiten Koppelfaktor 34 besteht folgender in der nachfolgenden Gleichung (10) dargestellter Zusammenhang:

$$L_{12} = k \sqrt{L_{11} L_{22}}. \tag{10}$$

wobei k allgemein für einen der Koppelfaktoren 32, 34 steht. Durch Einsetzen der Gleichung (10) in Gleichung (8) und Auflösen nach k, kann der erste Koppelfaktor 32 mittels der folgenden Gleichung (11) aus dem Ersatzwiderstand $R_{eq}$ bestimmt werden:

$$k_{R_{\mathrm{eq}}} = \sqrt{\frac{R_{\mathrm{eq}}\left(R_{\mathrm{load}}^2 + \left(\omega L_{22} - \dfrac{1}{\omega C_2}\right)^2\right)}{\omega^2 L_{11} L_{22} R_{\mathrm{load}}}}, \tag{11}$$

wobei $k_{Req}$ für den ersten Koppelfaktor 32 steht. Durch Einsetzen der Gleichung (10) in Gleichung (9) und Auflösen nach k, kann der zweite Koppelfaktor 34 mittels der folgenden Gleichung (12) aus der Ersatzinduktivität $L_{eq}$ bestimmt werden:

$$k_{L_{\mathrm{eq}}} = \sqrt{\frac{(L_{11} - L_{\mathrm{eq}})\left(R_{\mathrm{load}}^2 + \left(\omega L_{22} - \dfrac{1}{\omega C_2}\right)^2\right)}{\omega L_{11} L_{22}\left(\omega L_{22} - \dfrac{1}{\omega C_2}\right)}}. \tag{12}$$

wobei $k_{Leq}$ für den zweiten Koppelfaktor 34 steht.

Die Steuereinheit 16 ist dazu vorgesehen, den Korrekturfaktor 38 aus einem Vergleich zwischen dem ersten Koppelfaktor 32 und dem zweiten Koppelfaktor 34 zu bestimmen. Wie aus Gleichung (11) zu entnehmen ist, stellen die Koppelfaktoren 32, 34 einen Zusammenhang zwischen der Eigeninduktivität $L_{11}$ des Versorgungsinduktionselements 14, der Eigeninduktivität $L_{22}$ des Aufnahmeinduktionselements 24 und der Gegeninduktivität $L_{12}$ her. Allgemein beschreiben die Koppelfaktoren 32, 34 einen Anteil eines magnetischen Flusses, welcher von dem Versorgungsinduktionselement 14 und dem Aufnahmeinduktionselement 24 in dem Betriebszustand geteilt wird. Die Koppelfaktoren 32, 34 können Werte zwischen 0 und 1 annehmen, wobei ein Wert von 1 eine ideale magnetische Kopplung repräsentieren würde. In der Praxis treten jedoch magnetische Streuverluste auf, sodass die Werte der Koppelfaktoren 32, 34 kleiner als 1 sind. In der Theorie müssten der erste Koppelfaktor 32, welcher aus der Gleichung (12) bestimmt werden kann, und der zweite Koppelfaktor 34, welcher aus der Gleichung (13) bestimmt werden kann, für alle Frequenzen f der durch die Wechselspannungsquelle 78 bereitgestellten Wechselspannung identische Werte annehmen. Untersuchungen der Anmelderin haben jedoch gezeigt, dass der erste Koppelfaktor 32 und der zweite Koppelfaktor 34 in der Praxis voneinander abweichen. Die vorliegende Erfindung macht sich diesen Umstand zunutze, indem die Steuereinheit 16 in dem Betriebszustand den ersten Koppelfaktor 32 mit dem zweiten Koppelfaktor 34 vergleicht, um den zumindest einen Korrekturfaktor 38 zu ermitteln. Untersuchungen der Anmelderin haben gezeigt, dass der erste Koppelfaktor 32 sich mit Änderungen der Eigeninduktivität 52 des Versorgungsinduktionselements 14, der Eigeninduktivität 54 des Aufnahmeinduktionselements 24 und der Gegeninduktivität 56 nur leicht verändert, wohingegen der zweite Koppelfaktor 34 bei denselben Änderungen eine größere Varianz zeigt. Wenn der durch die Steuereinheit 16 in dem Betriebszustand bestimmte zweite Koppelfaktor 34 größer ist als der bestimmte erste Koppelfaktor 32 wird durch die Steuereinheit 16 der Rückschluss gezogen, dass die in der Speichereinheit 198 gespeicherten Werte der Eigeninduktivität 52 des Versorgungsinduktionselements 14, der Eigeninduktivität 54 des Aufnahmeinduktionselements 24 und der Gegeninduktivität 56 zu hoch sind und die Steuereinheit 16 korrigiert diese Parameter des Parametersatzes 36 mittels des zumindest einen Korrekturfaktors 38 nach unten. Wenn der durch die Steuereinheit 16 in dem Betriebszustand bestimmte zweite Koppelfaktor 34 kleiner ist als der bestimmte erste Koppelfaktor 32 wird durch die Steuereinheit 16 der Rückschluss gezogen, dass die in der Speichereinheit 198 gespeicherten Werte der Eigeninduktivität 52 des Versorgungsinduktionselements 14, der Eigeninduktivität 54 des Aufnahmeinduktionselements 24 und der Gegeninduktivität 56 zu niedrig sind und die Steuereinheit 16 korrigiert diese Parameter des Parametersatzes 36 mittels des zumindest einen Korrekturfaktors 38 nach oben. Beispielsweise können in der Speichereinheit 198 verschiedene Werte für den zumindest einen Korrekturfaktor 38 in Relation zu einer Differenz zwischen dem ersten Koppelfaktor 32 und dem zweiten Koppelfaktor 34 gespeichert sein. In der Speichereinheit 198 der Steuereinheit 16 kann alternativ oder zusätzlich auch ein durch die Recheneinheit 200 ausführbarer Algorithmus gespeichert sein, mittels dessen relativ genaue Schätzwerte der Eigeninduktivität 52 des Versorgungsinduktionselements 14, der Eigeninduktivität 54 des Aufnahmeinduktionselements 24 und der Gegeninduktivität 56, beispielsweise mittels numerischer Methoden, aus dem ersten Koppelfaktor 32 und dem zweiten Koppelfaktor 34 abgeleitet werden können. Denkbar ist auch, dass die Steuereinheit 16 die Werte des zumindest einen Korrekturfaktors 38 so lange variiert, bis sich die Werte des ersten Koppelfaktors 32 und des zweiten Koppelfaktors 34 einander ausreichend genau annähern.

Die Steuereinheit 16 ist ferner dazu vorgesehen, zur Berechnung des zumindest einen Koppelfaktors 42 zumindest eine Transformatorgleichung heranzuziehen. Die Berechnung des Koppelfaktors 42 kann alternativ oder zusätzlich zur Berechnung des ersten Koppelfaktors 32 und des zweiten Koppelfaktors 34 erfolgen. Hierzu kann das Versorgungsinduktionselement 14 als Primärseite eines Transformators und das Aufnahmeinduktionselement 14 als Sekundärseite des Transformators betrachtet werden. Eine erste Transformatorgleichung (13) für die Primärseite lautet in differentieller Form:

$$V_p = L_p \frac{dI_p}{dt} + M_{ps} \frac{dI_s}{dt} \qquad (13)$$

wobei $V_p$ für die in dem Betriebszustand durch die Wechselspannungsquelle 78 bereitgestellte Wechselspannung, $L_p$ für die Eigeninduktivität 52 des Versorgungsinduktionselements 14, $I_p$ für einen in dem Betriebszustand durch das Versorgungsinduktionselement 14 fließenden Wechselstrom, $M_{ps}$ für die Gegeninduktivität 56 zwischen dem Versorgungsinduktionselement 14 und dem Aufnahmeinduktionselement 24, $I_s$ für einen in dem Betriebszustand durch das Aufnahmeinduktionselement 24 fließenden Wechselstrom und t für die Zeit stehen.

Eine zweite Transformatorgleichung (14) für die Sekundärseite lautet in differentieller Form:

$$0 = L_s \frac{dI_s}{dt} + M_{ps} \frac{dI_p}{dt} + Z\,I_s \qquad (14)$$

wobei $L_s$ für die Eigeninduktivität 54 des Aufnahmeinduktionselements 24 und Z für eine Ersatzimpedanz aus dem elektrischen Widerstand 82 und dem

Kompensationskondensator 80 des Sekundärschaltkreises 92 (vgl. Figur 3) stehen. Für die Ersatzimpedanz Z gilt die folgende Gleichung (15):

$$Z = R_s + \frac{1}{C_s\,s} \qquad (15)$$

wobei $R_s$ für den Wert des elektrischen Widerstands 82, $C_s$ für die Kapazität des Kompensationskondensators 80 und s für einen komplexen Frequenzparameter für eine Laplace-Transformation stehen. Für den komplexen Frequenzparameter s gilt die folgende Gleichung (16):

$$s = j\omega = j2\pi f \qquad (16)$$

wobei j für die imaginäre Einheit, $\omega$ für die Kreisfrequenz, $\pi$ für die Kreiszahl und f für die Frequenz der durch die Wechselspannungsquelle 78 (vgl. Figur 3) bereitgestellten Wechselspannung stehen. Ferner kann die Resonanzfrequenz $\omega_r$ gemäß folgender Gleichung (17) bestimmt werden:

$$\omega_r = \frac{1}{\sqrt{L_p L_s}} \qquad (17)$$

Zudem kann die Zeitkonstante $\tau_s$ gemäß Gleichung (18) eingeführt werden:

$$\tau_s = \frac{L_s}{R_s} \qquad (18)$$

Für den Koppelfaktor 42 gilt analog zu obiger Gleichung (19) die folgende Gleichung (19):

$$k = \frac{M_{ps}}{\sqrt{L_p L_s}} \qquad (19)$$

wobei k für den Koppelfaktor 42 steht.

Eine Ersatzimpedanz $Z_p$ für die Primärseite lässt sich anhand der folgenden Gleichung (20) bestimmen:

$$Z_p = L_p \, s \, \frac{\left(\tau_s - k^2 \, \tau_s\right) s^2 + s + \tau_s \, \omega_r^2}{\tau_s \, s^2 + s + \tau_s \, \omega_r^2} \qquad (20)$$

Ein Ersatzwiderstand $R_{eq}$ kann mittels der folgenden Gleichung (21) wie folgt berechnet werden:

$$R_{eq} = \frac{L_p \tau_s k^2 \omega^2}{\tau_s{}^2 \omega^4 - 2\,\tau_s^2\,\omega^2\,\omega_r^2 + \tau_s{}^2 \omega_r^2 + \omega^2} \qquad (21)$$

Der Koppelfaktor 42 kann durch die Steuereinheit 16 unter Verwendung der Gleichungen (13) bis (21) wie folgt aus Gleichung (22) bestimmt werden:

$$k = \sqrt{\frac{R_{eq} \left(\tau_s{}^2 \, \omega^4 - 2\,\tau_s{}^2 \, \omega^2\omega_r^2 + \tau_s{}^2 \omega_r^2 + \omega^2\right)}{L_p \, \tau_s \, \omega^4}} \qquad (22)$$

Die Bestimmung des Koppelfaktors 42 kann durch die Steuereinheit 16 beispielsweise auch zur Steuerung der Versorgungseinheit 12 zur induktiven Bereitstellung von Energie an die Aufnahmeeinheit 22 der weiteren Aufstelleinheit 20 (vgl. Figur 1) herangezogen werden.

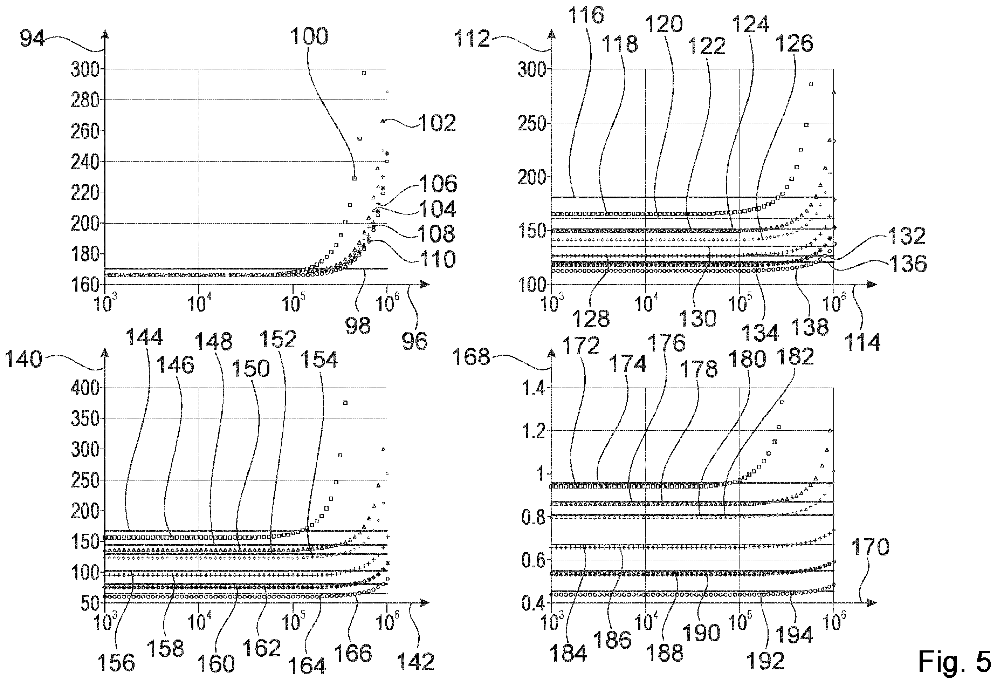

Figur 5 zeigt vier schematische Diagramme zur Darstellung von theoretischen Werten und Messwerten der Eigeninduktivität 52 des Versorgungsinduktionselements 14, der Eigeninduktivität 54 des Aufnahmeinduktionselements 24, der Gegeninduktivität 56 zwischen dem Versorgungsinduktionselement 14 und dem Aufnahmeinduktionselement 24 sowie aus den theoretischen Werten und den Messwerten ermittelter Koppelfaktoren.

Auf einer Ordinate 94 eines linken oberen Diagramms der Figur 5 ist eine Induktivität in Mikrohenry aufgetragen. Auf einer Abszisse 96 des linken oberen Diagramms ist die Frequenz f der durch die Wechselspannungsquelle 78 bereitgestellten Wechselspannung in Hertz aufgetragen. Eine Gerade 98 zeigt den theoretischen Wert der Eigeninduktivität 52 des Versorgungsinduktionselements 14, welcher in der Theorie über den gesamten Frequenzbereich konstant sein müsste. In der Praxis ergeben sich jedoch ab einer Frequenz von etwa $10^5$ Hertz erhebliche Abweichungen für Messwerte der Eigeninduktivität 52 des Versorgungsinduktionselements 14, welche unter anderem auch in Abhängigkeit von einem vertikalen Abstand 44 (vgl. Figur 3) zwischen dem Versorgungsinduktionselement 14 und dem Aufnahmeinduktionselement 24 variieren können. Eine erste Messkurve 100 in dem linken oberen Diagramm zeigt Messwerte der Eigeninduktivität 52 für einen vertikalen Abstand 44 von 0,7 Millimetern. Eine zweite Messkurve 102 in dem linken oberen Diagramm zeigt Messwerte der Eigeninduktivität 52 für einen vertikalen Abstand 44 von 6,6 Millimetern. Eine dritte Messkurve 104 in dem linken oberen Diagramm zeigt Messwerte der Eigeninduktivität 52 für einen vertikalen Abstand 44 von 10,8 Millimetern. Eine vierte Messkurve 106 in dem linken oberen Diagramm zeigt Messwerte der Eigeninduktivität 52 für einen vertikalen Abstand 44 von 20,8 Millimetern. Eine fünfte Messkurve 108 in dem linken oberen Diagramm zeigt Messwerte der Eigeninduktivität 52 für einen vertikalen Abstand 44 von 30,9 Millimetern. Eine sechste Messkurve 110 in dem linken oberen Diagramm zeigt Messwerte der Eigeninduktivität 52 für einen vertikalen Abstand 44 von 40,7 Millimetern.

Auf einer Ordinate 112 eines rechten oberen Diagramms der Figur 5 ist eine Induktivität in Mikrohenry aufgetragen. Auf einer Abszisse 114 des rechten oberen Diagramms ist die Frequenz f der durch die Wechselspannungsquelle 78 bereitgestellten Wechselspannung in Hertz aufgetragen. Eine erste Gerade 116 zeigt den theoretischen Wert der Eigeninduktivität 54 des Aufnahmeinduktionselements 24 für einen vertikalen Abstand 44 von 0,7 Millimetern, welcher in der Theorie über den gesamten Frequenzbereich konstant sein müsste. In der Praxis ergeben sich jedoch auch für die Eigeninduktivität 54 des Aufnahmeinduktionselements 24 ab einer Frequenz von etwa 105 Hertz erhebliche Abweichungen für Messwerte der Eigeninduktivität 54 des Aufnahmeinduktionselements 24, welche in einer ersten Messkurve 118 in dem linken unteren Diagramm dargestellt sind. Eine zweite Gerade 120 zeigt den theoretischen Wert der Eigeninduktivität 54 des Aufnahmeinduktionselements 24 für einen vertikalen Abstand 44 von 6,6 Millimetern, wobei eine zweite Messkurve 122 für den vertikalen Abstand 44 von 6,6 Millimetern von der zweiten Geraden 120 mit zunehmender Frequenz im Bereich zwischen $10^5$ Hertz und $10^6$ Hertz abweicht. Eine dritte Gerade 124 zeigt den theoretischen Wert der Eigeninduktivität 54 des Aufnahmeinduktionselements 24 für einen vertikalen Abstand 44 von 10,8 Millimetern, wobei eine dritte Messkurve 126 für den vertikalen Abstand 44 von 10,8 Millimetern von der dritte Geraden 124 mit zunehmender Frequenz im Bereich zwischen $10^5$ Hertz und $10^6$ Hertz abweicht. Eine vierte Gerade 128 zeigt den theoretischen Wert der Eigeninduktivität 54 des Aufnahmeinduktionselements 24 für einen vertikalen Abstand 44 von 20,8 Millimetern, wobei eine vierte Messkurve 130 für den vertikalen Abstand 44 von 20,8 Millimetern von der vierten Geraden 128 mit zunehmender Frequenz im Bereich zwischen $10^5$ Hertz und $10^6$ Hertz abweicht. Eine fünfte Gerade 132 zeigt den theoretischen Wert der Eigeninduktivität 54 des Aufnahmeinduktionselements 24 für einen vertikalen Abstand 44 von 30,9 Millimetern, wobei eine fünfte Messkurve 134 für den vertikalen Abstand 44 von 30,9 Millimetern von der fünften Geraden 132 mit zunehmender Frequenz im Bereich zwischen $10^5$ Hertz und $10^6$ Hertz abweicht. Eine sechste Gerade 136 zeigt den theoretischen Wert der Eigeninduktivität 54 des Aufnahmeinduktionselements 24 für einen vertikalen Abstand 44 von 40,7 Millimetern, wobei eine sechste Messkurve 138 für den vertikalen Abstand 44 von 40,7 Millimetern von der sechsten Geraden 136 mit zunehmender Frequenz im Bereich zwischen $10^5$ Hertz und $10^6$ Hertz abweicht.

Auf einer Ordinate 140 eines linken unteren Diagramms der Figur 5 ist eine Induktivität in Mikrohenry aufgetragen. Auf einer Abszisse 142 des linken oberen Diagramms ist die Frequenz f der durch die Wechselspannungsquelle 78 bereitgestellten Wechselspannung in Hertz aufgetragen. Eine erste Gerade 144 zeigt einen theoretischen Wert der Gegeninduktivität 56 zwischen Versorgungsinduktionselement 14 und dem Aufnahmeinduktionselement 24 für einen vertikalen Abstand 44 von 0,7 Millimetern, welcher in der Theorie über den gesamten Frequenzbereich konstant sein müsste. In der Praxis ergeben sich jedoch auch für die Gegeninduktivität 56 ab einer Frequenz von etwa $10^5$ Hertz erhebliche Abweichungen für Messwerte, welche in einer ersten Messkurve 146 in dem linken unteren Diagramm dargestellt sind. Eine zweite Gerade 148 zeigt den theoretischen Wert der Gegeninduktivität 56 für einen vertikalen Abstand 44 von 6,6 Millimetern, wobei eine zweite Messkurve 150 für den vertikalen Abstand 44 von 6,6 Millimetern von der zweiten Geraden 148 mit zunehmender Frequenz im Bereich zwischen $10^5$ Hertz und $10^6$ Hertz abweicht. Eine dritte Gerade 152 zeigt den theoretischen Wert der Gegeninduktivität 56 für einen vertikalen Abstand 44 von 6,6 Millimetern, wobei eine dritte Messkurve 154 für den vertikalen Abstand 44 von 6,6 Millimetern von der zweiten Geraden 148 mit zunehmender Frequenz im Bereich zwischen $10^5$ Hertz und $10^6$ Hertz abweicht. Eine vierte Gerade 156 zeigt den theoretischen Wert der Gegeninduktivität 56 für einen vertikalen Abstand 44 von 20,8 Millimetern, wobei eine vierte Messkurve 158 für den vertikalen Abstand 44 von 20,8 Millimetern von der vierten Geraden 156 mit zunehmender Frequenz im Bereich zwischen $10^5$ Hertz und $10^6$ Hertz abweicht. Eine fünfte Gerade 160 zeigt den theoretischen Wert der Gegeninduktivität 56 für einen vertikalen Abstand 44 von 30,9 Millimetern, wobei eine fünfte Messkurve 162 für den vertikalen Abstand 44 von 30,9 Millimetern von der fünften Geraden 160 mit zunehmender Frequenz im Bereich zwischen $10^5$ Hertz und $10^6$ Hertz abweicht. Eine sechste Gerade 164 zeigt den theoretischen Wert der Gegeninduktivität 56 für einen vertikalen Abstand 44 von 40,7 Millimetern, wobei eine sechste Messkurve 166 für den vertikalen Abstand 44 von 40,7 Millimetern von der sechsten Geraden 164 mit zunehmender Frequenz im Bereich zwischen $10^5$ Hertz und $10^6$ Hertz abweicht.

Auf einer Ordinate 168 eines rechten unteren Diagramms der Figur 5 ist ein dimensionsloser Koppelfaktor aufgetragen. Auf einer Abszisse 142 des rechten unteren Diagramms ist die Frequenz f der durch die Wechselspannungsquelle 78 bereitgestellten Wechselspannung in Hertz aufgetragen. Eine erste Gerade 172 in dem rechten unteren Diagramm zeigt einen theoretischen Koppelfaktor zwischen dem Versorgungsinduktionselement 14 und dem Aufnahmeinduktionselement 24 bei einem vertikalen Abstand 44 von 0,7 Millimetern, welcher über den gesamten Frequenzbereich konstant ist. Eine erste Kurve 174 zeigt Rechenwerte für einen berechneten Koppelfaktor aus den Messwerten für die Eigeninduktivität 52 des Versorgungsinduktionselements 14, der Eigeninduktivität 54 des Aufnahmeinduktionselements 24 und der Gegeninduktivität 56 für einen Abstand 44 von 0,7 Millimetern. Eine zweite Gerade 176 in dem rechten unteren Diagramm zeigt einen theoretischen Koppelfaktor zwischen dem Versorgungsinduktionselement 14 und dem Aufnahmeinduktionselement 24 bei einem vertikalen Abstand 44 von 6,6 Millimetern, welcher über den gesamten Frequenzbereich konstant ist. Eine zweite Kurve 178 zeigt Rechenwerte für einen berechneten Koppelfaktor aus den Messwerten für die Eigeninduktivität 52 des Versorgungsinduktionselements 14, der Eigeninduktivität 54 des Aufnahmeinduktionselements 24 und der Gegeninduktivität 56 für einen vertikalen Abstand 44 von 6,6 Millimetern. Eine dritte Gerade 180 in dem rechten unteren Diagramm zeigt einen theoretischen Koppelfaktor zwischen dem Versorgungsinduktionselement 14 und dem Aufnahmeinduktionselement 24 bei einem vertikalen Abstand 44 von 10,8 Millimetern, welcher über den gesamten Frequenzbereich konstant ist. Eine dritte Kurve 182 zeigt Rechenwerte für einen berechneten Koppelfaktor aus den Messwerten für die Eigeninduktivität 52 des Versorgungsinduktionselements 14, der Eigeninduktivität 54 des Aufnahmeinduktionselements 24 und der Gegeninduktivität 56 für einen vertikalen Abstand 44 von 10,8 Millimetern. Eine vierte Gerade 184 in dem rechten unteren Diagramm zeigt einen theoretischen Koppelfaktor zwischen dem Versorgungsinduktionselement 14 und dem Aufnahmeinduktionselement 24 bei einem vertikalen Abstand 44 von 20,8 Millimetern, welcher über den gesamten Frequenzbereich konstant ist. Eine vierte Kurve 186 zeigt Rechenwerte für einen berechneten Koppelfaktor aus den Messwerten für die Eigeninduktivität 52 des Versorgungsinduktionselements 14, der Eigeninduktivität 54 des Aufnahmeinduktionselements 24 und der Gegeninduktivität 56 für einen vertikalen Abstand 44 von 20,8 Millimetern. Eine fünfte Gerade 188 in dem rechten unteren Diagramm zeigt einen theoretischen Koppelfaktor zwischen dem Versorgungsinduktionselement 14 und dem Aufnahmeinduktionselement 24 bei einem vertikalen Abstand 44 von 30,9 Millimetern, welcher über den gesamten Frequenzbereich konstant ist. Eine fünfte Kurve 190 zeigt Rechenwerte für einen berechneten Koppelfaktor aus den Messwerten für die Eigeninduktivität 52 des Versorgungsinduktionselements 14, der Eigeninduktivität 54 des Aufnahmeinduktionselements 24 und der Gegeninduktivität 56 für einen vertikalen Abstand 44 von 30,9 Millimetern. Eine sechste Gerade 192 in dem rechten unteren Diagramm zeigt einen theoretischen Koppelfaktor zwischen dem Versorgungsinduktionselement 14 und dem Aufnahmeinduktionselement 24 bei einem vertikalen Abstand 44 von 40,7 Millimetern, welcher über den gesamten Frequenzbereich konstant ist. Eine sechste Kurve 194 zeigt Rechenwerte für einen berechneten Koppelfaktor aus den Messwerten für die Eigeninduktivität 52 des Versorgungsinduktionselements 14, der Eigeninduktivität 54 des Aufnahmeinduktionselements 24 und der Gegeninduktivität 56 für einen vertikalen Abstand 44 von 40,7 Millimetern.

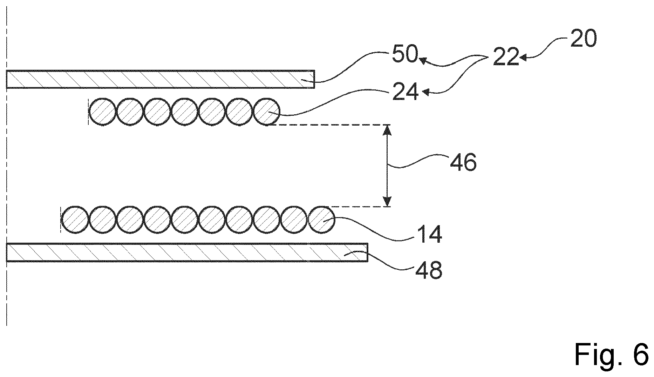

Figur 6 zeigt eine schematische Darstellung des Versorgungselements 14 und des Aufnahmeinduktionselements 24 der Aufnahmeeinheit 22 der weiteren Aufstelleinheit 20 zusammen mit einem magnetischen Flussbündelungselement 48 der Versorgungseinheit 12 und einem magnetischen Flussbündelungselement 50 der Aufnahmeeinheit 22. In Figur 6 ist ein vertikaler Abstand 46 zwischen dem Versorgungsinduktionselement 14 und dem Aufnahmeinduktionselement 24 dargestellt. Die Steuereinheit 16 ist dazu vorgesehen, bei der Bestimmung des Korrekturfaktors 38 den vertikalen Abstand 44 zwischen dem Versorgungsinduktionselement 14 und dem Aufnahmeinduktionselement 24 zu berücksichtigen. In der Speichereinheit 198 der Steuereinheit 16 können verschiedene Messwerte für Kopplungsfaktoren 32, 34, 42 für unterschiedliche vertikale Abstände 44 zwischen dem Versorgungsinduktionselement 14 und dem Aufnahmeinduktionselement 24, beispielsweise die in Figur 5 dargestellten Messwerte und/oder weitere Messwerte, gespeichert sein.

Die Steuereinheit 16 ist dazu vorgesehen, bei der Bestimmung des Korrekturfaktors 38, eine magnetische Permeabilität (nicht dargestellt) des magnetischen Flussbündelungselements 48 der Versorgungseinheit 12 und/oder des magnetischen Flussbündelungselements 50 der Aufnahmeeinheit 22 zu berücksichtigen.

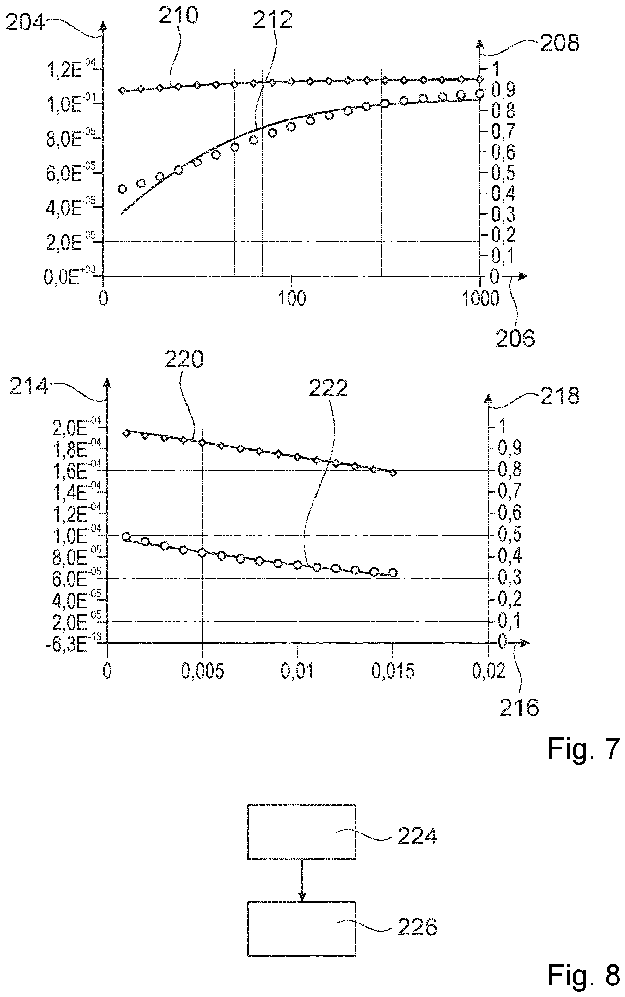

Figur 7 zeigt zwei schematische Diagramme zur Darstellung von Einflussgrößen auf die Parameter 26, 28, 30 des Parametersatzes 36, welche durch die Anmelderin im Rahmen von Messreihen ermittelt wurden. Auf einer linken Ordinate 204 eines oberen Diagramms der Figur 7 ist eine Induktivität in Henry aufgetragen. Auf einer Abszisse 206 des oberen Diagramms ist eine dimensionslose magnetische Permeabilität aufgetragen. Auf einer rechten Ordinate 208 des oberen Diagramms ist der dimensionslose Koppelfaktor 42 aufgetragen. Eine erste Kurve 210 zeigt einen Verlauf des Koppelfaktors 42 in Abhängigkeit der magnetischen Permeabilität. Eine zweite Kurve 212 zeigt einen Verlauf der Eigeninduktivität 52 des Versorgungsinduktionselements 14 und eine Eigeninduktivität (nicht dargestellt) des Aufnahmeinduktionselements 24 der Aufnahmeeinheit 22 der weiteren Aufstelleinheit 20 in Abhängigkeit der magnetischen Permeabilität, wobei die Eigeninduktivität 52 des Versorgungsinduktionselements 14 und die Eigeninduktivität des Aufnahmeinduktionselements 24 vorliegend die gleichen Werte aufweisen.

Auf einer linken Ordinate 214 eines unteren Diagramms der Figur 7 ist eine Induktivität in Henry aufgetragen. Auf einer Abszisse 216 des unteren Diagramms ist der vertikale Abstand 46 in Metern aufgetragen. Auf einer rechten Ordinate 218 des unteren Diagramms ist der dimensionslose Kopplungsfaktor 42 aufgetragen. Eine erste Kurve 220 in dem rechten Diagramm zeigt einen Verlauf des Kopplungsfaktors 42 in Abhängigkeit des vertikalen Abstands 46. Eine zweite Kurve 222 in dem rechten Diagramm zeigt einen Verlauf der Eigeninduktivität 52 des Versorgungsinduktionselements 14 und der Eigeninduktivität des Aufnahmeinduktionselements 24 der Aufnahmeeinheit 22 der weiteren Aufstelleinheit 20 in Abhängigkeit des Abstands 46.

Die in der Figur 7 gezeigten Messreihen der magnetischen Permeabilität und des vertikalen Abstands 46 als Einflussgrößen auf die induktive Energieübertragung können in der Speichereinheit 198 gespeichert und von der Steuereinheit 16 bei der Bestimmung des zumindest einen Korrekturfaktors 38, beispielsweise in Kombination mit dem bestimmten Koppelfaktor 42, berücksichtigt werden.

Figur 8 zeigt ein schematisches Verfahrensfließbild eines Verfahrens zum Betrieb des Induktionsenergieübertragungssystems 10. Das Verfahren umfasst zumindest zwei Verfahrensschritte 224, 226. In einem ersten Verfahrensschritt 224 des Verfahrens wird zumindest ein Parameter 26 des Parametersatzes 36 von der Aufstelleinheit 18 und/oder der weiteren Aufstelleinheit 20 empfangen und der Parametersatz 36 zur Steuerung der Versorgungseinheit 12 herangezogen. In einem zweiten Verfahrensschritt 226 des Verfahrens wird der zumindest eine Korrekturfaktor 38 für zumindest einen der Parameter 26, 28, 30 des Parametersatzes 36 bestimmt.

Bezugszeichen

| | |
|---|---|
| 10 | Induktionsenergieübertragungssystem |
| 12 | Versorgungseinheit |
| 14 | Versorgungsinduktionselement |
| 16 | Steuereinheit |
| 18 | Aufstelleinheit |
| 20 | weitere Aufstelleinheit |
| 22 | Aufnahmeeinheit |
| 24 | Aufnahmeinduktionselement |
| 26 | Parameter |
| 28 | weiterer Parameter |
| 30 | weiterer Parameter |
| 32 | erster Koppelfaktor |
| 34 | zweiter Koppelfaktor |
| 36 | Parametersatz |
| 38 | Korrekturfaktor |
| 40 | Ersatzimpedanz |
| 42 | Koppelfaktor |
| 44 | vertikaler Abstand |
| 46 | vertikaler Abstand |
| 48 | magnetisches Flussbündelungselement |
| 50 | magnetisches Flussbündelungselement |
| 52 | Eigeninduktivität |
| 54 | Eigeninduktivität |
| 56 | Gegeninduktivität |
| 58 | Aufstellplatte |
| 60 | Induktionskochfeld |
| 62 | Haushaltskleingerät |
| 64 | weiteres Haushaltskleingerät |
| 66 | Kommunikationseinheit |
| 68 | Kommunikationselement |
| 70 | weiteres Kommunikationselement |
| 72 | weiteres Kommunikationselement |
| 74 | Kompensationskondensator |
| 76 | elektrischer Widerstand |
| 78 | Wechselspannungsquelle |
| 80 | Kompensationskondensator |
| 82 | elektrischer Widerstand |
| 84 | Ersatzimpedanz |

| | |
|---|---|
| 86 | Ersatzimpedanz |
| 88 | Ersatzimpedanz |
| 90 | Primärschaltkreis |
| 92 | Sekundärschaltkreis |
| 94 | Ordinate |
| 96 | Abszisse |
| 98 | Gerade |
| 100 | erste Messkurve |
| 102 | zweite Messkurve |
| 104 | dritte Messkurve |
| 106 | vierte Messkurve |
| 108 | fünfte Messkurve |
| 110 | sechste Messkurve |
| 112 | Ordinate |
| 114 | Abszisse |
| 116 | erste Gerade |
| 118 | erste Messkurve |
| 120 | zweite Gerade |
| 122 | zweite Messkurve |
| 124 | dritte Gerade |
| 126 | dritte Messkurve |
| 128 | vierte Gerade |
| 130 | vierte Messkurve |
| 132 | fünfte Gerade |
| 134 | fünfte Messkurve |
| 136 | sechste Gerade |
| 138 | sechste Messkurve |
| 140 | Ordinate |
| 142 | Abszisse |
| 144 | erste Gerade |
| 146 | erste Messkurve |
| 148 | zweite Gerade |
| 150 | zweite Messkurve |
| 152 | dritte Gerade |
| 154 | dritte Messkurve |
| 156 | vierte Gerade |
| 158 | vierte Messkurve |
| 160 | fünfte Gerade |
| 162 | fünfte Messkurve |
| 164 | sechste Gerade |
| 166 | sechste Messkurve |
| 168 | Ordinate |
| 170 | Abszisse |
| 172 | erste Gerade |
| 174 | erste Kurve |
| 176 | zweite Gerade |
| 178 | zweite Kurve |
| 180 | dritte Gerade |
| 182 | dritte Kurve |
| 184 | vierte Gerade |
| 186 | vierte Kurve |
| 188 | fünfte Gerade |
| 190 | fünfte Kurve |
| 192 | sechste Gerade |
| 194 | sechste Kurve |
| 198 | Speichereinheit |
| 200 | Recheneinheit |
| 202 | Wechselrichtereinheit |

| 204 | linke Ordinate |
| 206 | Abszisse |
| 208 | rechte Ordinate |
| 210 | erste Kurve |
| 212 | zweite Kurve |
| 214 | linke Ordinate |
| 216 | Abszisse |
| 218 | rechte Ordinate |
| 220 | erste Kurve |
| 222 | zweite Kurve |
| 224 | erster Verfahrensschritt |
| 226 | zweiter Verfahrensschritt |

**Patentansprüche**

1. Induktionsenergieübertragungssystem (10), insbesondere Induktionsgarsystem, mit einer Versorgungseinheit (12), welche zumindest ein Versorgungsinduktionselement (14) zur induktiven Bereitstellung von Energie aufweist, mit einer Steuereinheit (16) zur Steuerung der Versorgungseinheit (12), und mit zumindest einer Aufstelleinheit (18, 20), welche zumindest eine Aufnahmeeinheit (22) mit zumindest einem Aufnahmeinduktionselement (24) zu einem Empfang der induktiv bereitgestellten Energie aufweist, wobei die Steuereinheit (16) dazu vorgesehen ist, zur Steuerung der Versorgungseinheit (12) einen Parametersatz (36) heranzuziehen und zumindest einen Parameter (26) des Parametersatzes (36) von der Aufstelleinheit (18, 20) zu empfangen, **dadurch gekennzeichnet, dass** die Steuereinheit (16) dazu vorgesehen ist, zumindest einen Korrekturfaktor (38) für zumindest einen der Parameter (26, 28, 30) des Parametersatzes (36) zu bestimmen.

2. Induktionsenergieübertragungssystem (10) nach Anspruch 1, **dadurch gekennzeichnet, dass** die Steuereinheit (16) dazu vorgesehen ist, zur Bestimmung des Korrekturfaktors (38) zumindest einen Koppelfaktor (32, 34, 42) zwischen dem Aufnahmeinduktionselement (24) und dem Versorgungsinduktionselement (14) zu bestimmen.

3. Induktionsenergieübertragungssystem (10) nach Anspruch 1 oder 2, **dadurch gekennzeichnet, dass** die Steuereinheit (16) dazu vorgesehen ist, zur Bestimmung des Korrekturfaktors (38) eine Ersatzimpedanz (40) zwischen der Versorgungseinheit (12) und der Aufnahmeeinheit (22) heranzuziehen.

4. Induktionsenergieübertragungssystem (10) nach Anspruch 3, **dadurch gekennzeichnet, dass** die Steuereinheit (16) dazu vorgesehen ist, einen Ersatzwiderstand aus dem Realteil der Ersatzimpedanz (40) zu bestimmen.

5. Induktionsenergieübertragungssystem (10) nach Anspruch 3 oder 4, **dadurch gekennzeichnet, dass** die Steuereinheit (16) dazu vorgesehen ist, eine Ersatzinduktivität aus dem Imaginärteil der Ersatzimpedanz (40) zu bestimmen.

6. Induktionsenergieübertragungssystem (10) nach Anspruch 4 oder 5, **dadurch gekennzeichnet, dass** die Steuereinheit (16) dazu vorgesehen ist, einen ersten Koppelfaktor (32) zwischen der Versorgungseinheit (12) und der Aufnahmeeinheit (22) aus dem Ersatzwiderstand zu bestimmen.

7. Induktionsenergieübertragungssystem (10) nach Anspruch 5 oder 6, **dadurch gekennzeichnet, dass** die Steuereinheit (16) dazu vorgesehen ist, einen zweiten Koppelfaktor (34) zwischen der Versorgungseinheit (12) und der Aufnahmeeinheit (22) aus der Ersatzinduktivität zu bestimmen.

8. Induktionsenergieübertragungssystem (10) nach den Ansprüchen 6 und 7, **dadurch gekennzeichnet, dass** die Steuereinheit (16) dazu vorgesehen ist, den Korrekturfaktor (38) aus einem Vergleich zwischen dem ersten Koppelfaktor (32) und dem zweiten Koppelfaktor (34) zu bestimmen.

9. Induktionsenergieübertragungssystem (10) nach einem der Ansprüche 2 bis 8, **dadurch gekennzeichnet, dass** die Steuereinheit (16) dazu vorgesehen ist, zur Berechnung des zumindest einen Koppelfaktors (42) zumindest eine Transformatorgleichung heranzuziehen.

10. Induktionsenergieübertragungssystem (10) nach einem der vorhergehenden Ansprüche, **dadurch gekennzeichnet, dass** die Steuereinheit (16) dazu vorgesehen ist, bei der Bestimmung des Korrekturfaktors (38) einen vertikalen Abstand (44, 46) zwischen dem Versorgungsinduktionselement (14) und dem Aufnahmeinduktionselement (24) zu berücksichtigen.

11. Induktionsenergieübertragungssystem (10) nach einem der vorhergehenden Ansprüche, **dadurch gekennzeichnet, dass** die Steuereinheit (16) dazu vorgesehen ist, bei der Bestimmung des Korrekturfaktors (38), eine magnetische Permeabilität eines magnetischen Flussbündelungselements (48, 50) der Versorgungseinheit (12) und/oder Aufnahmeeinheit (22) zu berücksichtigen.

12. Induktionsenergieübertragungssystem (10) nach einem der vorhergehenden Ansprüche, **dadurch gekennzeichnet, dass** der Parametersatz (36) eine Eigeninduktivität (52) des Versorgungsinduktionselements (14) umfasst.

13. Induktionsenergieübertragungssystem (10) nach einem der vorhergehenden Ansprüche, **dadurch gekennzeichnet, dass** der Parametersatz (36) eine Eigeninduktivität (54) des Aufnahmeinduktionselements (24) umfasst.

14. Induktionsenergieübertragungssystem (10) nach einem der vorhergehenden Ansprüche, **dadurch gekennzeichnet, dass** der Parametersatz (36) eine Gegeninduktivität (56) zwischen dem Versorgungsinduktionselement (14) und dem Aufnahmeinduktionselement (24) umfasst.

15. Verfahren zum Betrieb eines Induktionsenergieübertragungssystems (10), insbesondere nach einem der Ansprüche 1 bis 14, mit einer Versorgungseinheit (12), welche zumindest ein Versorgungsinduktionselement (14) zur induktiven Bereitstellung von Energie aufweist, und mit zumindest einer Aufstelleinheit (18, 20), welche zumindest eine Aufnahmeeinheit (22) mit zumindest einem Aufnahmeinduktionselement (24) zu einem Empfang der induktiv bereitgestellten Energie aufweist, wobei zur Steuerung der Versorgungseinheit (12) ein Parametersatz (36) herangezogen wird und zumindest ein Parameter (26) des Parametersatzes (36) von der Aufstelleinheit (18, 20) empfangen wird, **dadurch gekennzeichnet, dass** zumindest ein Korrekturfaktor (38) für zumindest einen der Parameter (26, 28, 30) des Parametersatzes (36) bestimmt wird.

**Claims**

1. Induction energy transmission system (10), in particular induction cooking system, with a supply unit (12) which has at least one supply induction element (14) for inductively providing energy, with a control unit (16) for controlling the supply unit (12), and with at least one positioned unit (18, 20) which has at least one receiving unit (22) with at least one receiving induction element (24) for receiving the inductively provided energy, wherein the control unit (16) is provided to use a parameter set (36) to control the supply unit (12) and to receive at least one parameter (26) of the parameter set (36) from the positioned unit (18, 20), **characterised in that** the control unit (16) is provided to determine at least one correction factor (38) for at least one of the parameters (26, 28, 30) of the parameter set (36).

2. Induction energy transmission system (10) according to claim 1, **characterised in that** the control unit (16) is provided, for the determination of the correction factor (38), to determine at least one coupling factor (32, 34, 42) between the receiving induction element (24) and the supply induction element (14).

3. Induction energy transmission system (10) according to claim 1 or 2, **characterised in that** the control unit (16) is provided, for the determination of the correction factor (38), to use an equivalent impedance (40) between the supply unit (12) and the receiving unit (22).

4. Induction energy transmission system (10) according to claim 3, **characterised in that** the control unit (16) is provided to determine an equivalent resistance from the real part of the equivalent impedance (40).

5. Induction energy transmission system (10) according to claim 3 or 4, **characterised in that** the control unit (16) is provided to determine an equivalent inductance from the imaginary part of the equivalent impedance (40).

6. Induction energy transmission system (10) according to claim 4 or 5, **characterised in that** the control unit (16) is provided to determine a first coupling factor (32) between the supply unit (12) and the receiving unit (22) from the equivalent resistance.

7. Induction energy transmission system (10) according to claim 5 or 6, **characterised in that** the control unit (16) is provided to determine a second coupling factor (34) between the supply unit (12) and the receiving unit (22) from the equivalent inductance.

8. Induction energy transmission system (10) according to claims 6 and 7, **characterised in that** the control unit (16) is provided to determine the correction factor (38) from a comparison between the first coupling factor (32) and the second coupling factor (34).

9. Induction energy transmission system (10) according to one of claims 2 to 8, **characterised in that** the control unit (16) is provided to use at least one transformer equation for the calculation of the at least one coupling factor (42).

10. Induction energy transmission system (10) according to one of the preceding claims, **characterised in that** the control unit (16) is provided to take into account a vertical distance (44, 46) between the supply induction element (14) and the receiving induction element (24) in the determination of the correction factor (38).

11. Induction energy transmission system (10) according to one of the preceding claims, **characterised in that** the control unit (16) is provided to take into account a magnetic permeability of a magnetic flux bundling element (48, 50) of the supply unit (12) and/or receiving unit (22) in the determination of the correction factor (38).

12. Induction energy transmission system (10) according to one of the preceding claims, **characterised in that** the parameter set (36) comprises a self-inductance (52) of the supply induction element (14).

13. Induction energy transmission system (10) according to one of the preceding claims, **characterised in that** the parameter set (36) comprises a self-inductance (54) of the receiving induction element (24).

14. Induction energy transmission system (10) according to one of the preceding claims, **characterised in that** the parameter set (36) comprises a mutual inductance (56) between the supply induction element (14) and the receiving induction element (24).

15. Method for operating an induction energy transmission system (10), in particular according to one of claims 1 to 14, with a supply unit (12) which has at least one supply induction element (14) for inductively providing energy, and with at least one positioned unit (18, 20) which has at least one receiving unit (22) with at least one receiving induction element (24) for receiving the inductively provided energy, wherein a parameter set (36) is used to control the supply unit (12) and at least one parameter (26) of the parameter set (36) is received from the positioned unit (18, 20), **characterised in that** at least one correction factor (38) is determined for at least one of the parameters (26, 28, 30) of the parameter set (36).

## Revendications

1. Système de transmission d'énergie d'induction (10), en particulier système de cuisson par induction, avec une unité d'alimentation (12), qui présente au moins un élément d'induction d'alimentation (14) permettant de fournir de l'énergie par induction, avec une unité de commande (16) permettant de commander l'unité d'alimentation (12), et avec au moins une unité de mise en place (18, 20) qui présente au moins une unité de réception (22) avec au moins un élément d'induction de réception (24) permettant de recevoir de l'énergie fournie par induction, dans lequel l'unité de commande (16) est prévue afin d'utiliser un ensemble de paramètres (36) permettant de commander l'unité d'alimentation (12) et afin de recevoir au moins un paramètre (26) de l'ensemble de paramètres (36) de l'unité de mise en place (18, 20), **caractérisé en ce que** l'unité de commande (16) est prévue afin de déterminer au moins un facteur de correction (38) pour au moins un des paramètres (26, 28, 30) de l'ensemble de paramètres (36).

2. Système de transmission d'énergie d'induction (10) selon la revendication 1, **caractérisé en ce que** l'unité de commande (16) est prévue afin de déterminer au moins un facteur de couplage (32, 34, 42) entre l'élément d'induction de réception (24) et l'élément d'induction d'alimentation (14) afin de déterminer le facteur de correction (38).

3. Système de transmission d'énergie d'induction (10) selon la revendication 1 ou 2, **caractérisé en ce que** l'unité de commande (16) est prévue afin d'utiliser une impédance de remplacement (40) entre l'unité d'alimentation (12) et l'unité de réception (22) afin de déterminer le facteur de correction (38).

4. Système de transmission d'énergie d'induction (10) selon la revendication 3, **caractérisé en ce que** l'unité de commande (16) est prévue afin de déterminer une résistance de remplacement à partir de la partie réelle de l'impédance de remplacement (40).

5. Système de transmission d'énergie d'induction (10) selon la revendication 3 ou 4, **caractérisé en ce que** l'unité de commande (16) est prévue afin de déterminer une inductance de remplacement à partir de la partie imaginaire de l'impédance de remplacement (40).

6. Système de transmission d'énergie d'induction (10) selon la revendication 4 ou 5, **caractérisé en ce que** l'unité de commande (16) est prévue afin de déterminer un premier facteur de couplage (32) entre l'unité d'alimentation (12) et l'unité de réception (22) à partir de la résistance de remplacement.

7. Système de transmission d'énergie d'induction (10) selon la revendication 5 ou 6, **caractérisé en ce que** l'unité de commande (16) est prévue afin de déterminer un second facteur de couplage (34) entre l'unité d'alimentation (12) et l'unité de réception (22) à partir de l'inductance de remplacement.

8. Système de transmission d'énergie d'induction (10) selon les revendications 6 et 7, **caractérisé en ce que** l'unité de commande (16) est prévue afin de déterminer le facteur de correction (38) à partir d'une comparaison entre le premier facteur de couplage (32) et le second facteur de couplage (34).

9. Système de transmission d'énergie d'induction (10) selon l'une quelconque des revendications 2 à 8, **caractérisé en ce que** l'unité de commande (16) est prévue afin d'utiliser au moins une équation de transformateur pour le calcul du au moins un facteur de couplage (42).

10. Système de transmission d'énergie par induction (10) selon l'une quelconque des revendications précédentes, **caractérisé en ce que** l'unité de commande (16) est prévue afin de prendre en compte une distance verticale (44, 46) entre l'élément d'induction d'alimentation (14) et l'élément d'induction de réception (24) lors de la détermination du facteur de correction (38).

11. Système de transmission d'énergie d'induction (10) selon l'une quelconque des revendications précédentes, **caractérisé en ce que** l'unité de commande (16) est prévue afin de tenir compte d'une perméabilité magnétique d'un élément de regroupement de flux magnétique (48, 50) de l'unité d'alimentation (12) et/ou de l'unité de réception (22) lors de la détermination du facteur de correction (38).

12. Système de transmission d'énergie d'induction (10) selon l'une quelconque des revendications précédentes, **caractérisé en ce que** l'ensemble de paramètres (36) comprend une inductance propre (52) de l'élément d'induction d'alimentation (14).

13. Système de transmission d'énergie d'induction (10) selon l'une quelconque des revendications précédentes, **caractérisé en ce que** l'ensemble de paramètres (36) comprend une inductance propre (54) de l'élément d'induction de réception (24).

14. Système de transmission d'énergie d'induction (10) selon l'une quelconque des revendications précédentes, **caractérisé en ce que** l'ensemble de paramètres (36) comprend une inductance mutuelle (56) entre l'élément d'induction d'alimentation (14) et l'élément d'induction de réception (24).

15. Procédé de fonctionnement d'un système de transmission d'énergie d'induction (10), en particulier selon l'une quelconque des revendications 1 à 14, comprenant une unité d'alimentation (12) qui présente au moins un élément d'induction d'alimentation (14) permettant de fournir de l'énergie par induction, et au moins une unité de mise en place (18, 20) qui présente au moins une unité de réception (22) avec au moins un élément d'induction de réception (24) pour une réception de l'énergie fournie par induction, dans lequel un ensemble de paramètres (36) est utilisé afin de commander l'unité d'alimentation (12) et au moins un paramètre (26) de l'ensemble de paramètres (36) est reçu par l'unité de mise en place (18, 20), **caractérisé en ce qu'**au moins un facteur de correction (38) est déterminé pour au moins un des paramètres (26, 28, 30) de l'ensemble de paramètres (36).

Fig. 1

Fig. 2

EP 4 454 414 B1

Fig. 3

Fig. 4

Fig. 5

Fig. 6

Fig. 7

Fig. 8

**EP 4 454 414 B1**

**IN DER BESCHREIBUNG AUFGEFÜHRTE DOKUMENTE**

**In der Beschreibung aufgeführte Patentdokumente**

- EP 2878169 B1